# EUROPEAN PATENT APPLICATION

(11) **EP 4 366 305 A1**
(43) Date of publication of application: **08.05.2024**
(21) Application number: 22831858.0
(22) Date of filing: 24.06.2022
(51) Int. Cl.: H04N 19/184, H04N 19/85

(54) **ENCODING METHOD FOR VIDEO DATA, DECODING METHOD FOR VIDEO DATA, COMPUTING DEVICE, AND MEDIUM**

(30) Priority: 29.06.2021 CN 202110723894
(71) Applicant: BOE Technology Group Co., Ltd., Chaoyang District, Beijing 100015 (CN); Beijing BOE Technology Development Co., Ltd., Beijing 100176 (CN)
(72) Inventor: ZHANG, Qian, Beijing 100176 (CN)
(74) Representative: Klunker IP Patentanwälte PartG mbB
(86) International application number: PCT/CN2022/100950
(87) International publication number: WO 2023/274044

(57) **Abstract**

The present disclosure provides an encoding method for video data, a decoding method for video data, a computing device, and a medium. The encoding method comprises: performing bit-depth transformation on an image to generate a transformed image and generate bit-depth transformation information, wherein the bit-depth transformation information indicates information associated with the bit-depth transformation performed on the image, and the image is one image frame of video data; and encoding the transformed image to generate encoding information corresponding to the transformed image, wherein the bit-depth transformation information and the encoding information are used for forming a bit stream. The decoding method comprises: parsing, from a received bit stream, bit-depth transformation information and encoding information that correspond to an image, wherein the bit-depth transformation information indicates information associated with bit-depth transformation performed in the process of encoding the image; and performing decoding and transformation according to the bit-depth transformation information and the encoding information to generate a display image.

## Description

### TECHNICAL FIELD

The present disclosure relates to an encoding method for video data, a decoding method for video data, a computing device and a medium.

### BACKGROUND

Digital video capabilities may be incorporated into a wide variety of device including digital television, digital live broadcast systems, over-the-air broadcast systems, laptop or desktop computers, tablet computers, e-readers, digital cameras, digital recording devices, digital media players, video game device, video game consoles, smartphones, video teleconferencing device and video streaming device, etc. Digital video device can implement video coding techniques such as video coding techniques described in the standards defined by MPEG-2, MPEG-4, ITU-T H.263, ITU-T H.264/MPEG-4, Part 10, Advanced Video Coding (AVC), High Efficiency Video Coding (HEVC), ITU-T H.265/High Efficiency Video Coding, and extensions to such standards. By implementing the above video coding techniques, video device can more efficiently send, receive, encode, decode and/or store digital video information.

### SUMMARY

Some embodiments of the present disclosure provide an encoding method for video data, a decoding method for video data, a computing device and a medium used for flexibly process a bit depth of pictures in the codec.

According to an aspect of the present disclosure, the encoding method for video data is provided, which includes: performing bit depth transform processing on a picture to generate a transformed picture and generate bit depth transform information, in which the bit depth transform information indicates information that is associated with the bit depth transform processing performed on the picture, and the picture is one frame of pictures in the video data; and encoding the transformed picture to generate encoding information corresponding to the transformed picture, in which the bit depth transform information and the encoding information are used to form a bitstream.

According to some embodiments of the present disclosure, the bit depth transform processing is bit depth compression processing, and performing the bit depth transform processing on the picture, includes: utilizing a bit depth compression method to perform bit depth compression on the picture to reduce a bit depth of the picture, in which the bit depth transform information includes bit depth compression control information indicating information that is associated with the bit depth compression processing.

According to some embodiments of the present disclosure, the bit depth compression control information includes at least one of cases below: information indicating the bit depth compression method, information indicating an initial bit depth before the bit depth compression processing, information indicating a compressed bit depth after the bit depth compression processing.

According to some embodiments of the present disclosure, the encoding method further includes: decoding the encoding information to generate a decoded picture; and performing bit depth inverse transform processing on the decoded picture to generate an inverse transformed picture and generate bit depth inverse transform information, in which the bit depth inverse transform processing and the bit depth transform processing are inverse operations, and the bit depth inverse transform information indicates information that is associated with the bit depth inverse transform processing performed on the decoded picture.

According to some embodiments of the present disclosure, the encoding method further includes: comparing the inverse transformed picture with the picture to perform effect verification to generate bit depth verification effect information, in which the bit depth verification effect information includes at least one of cases below: verification control information indicating whether to perform the effect verification, information indicating an effect verification method of the effect verification, and information indicating a verification result of the effect verification method.

According to some embodiments of the present disclosure, the bit depth inverse transform information includes bit depth inverse transform control information indicating information that is associated with the bit depth inverse transform processing.

According to some embodiments of the present disclosure, the bit depth inverse transform control information includes bit depth inverse transform switch information indicating whether to perform the bit depth inverse transform processing on the decoded picture.

According to some embodiments of the present disclosure, performing the bit depth inverse transform processing on the decoded picture, includes: in response to the bit depth inverse transform switch information indicating that the bit depth inverse transform processing is performed, bit depth utilizing a bit depth inverse transform method to perform a bit depth inverse transform on the decoded picture, which is used for changing a bit depth of the decoded picture in a direction opposite to the bit depth transform.

According to some embodiments of the present disclosure, the bit depth inverse transform control information further includes at least one of cases below: information indicating the bit depth inverse transform method, information indicating an input bit depth before the bit depth inverse transform processing, information indicating an output bit depth after the bit depth inverse transform processing.

According to some embodiments of the present disclosure, the bit depth transform processing is bit depth compression processing, and the bit depth inverse transform processing is bit depth expansion processing.

According to some embodiments of the present disclosure, the bitstream includes a bit depth transform extension bit, the bit depth transform extension bit is used to transmit the bit depth transform information in the bitstream.

According to another aspect of the present disclosure, the decoding method for video data is further provided, which includes: parsing, from a received bitstream, bit depth transform information and encoding information corresponding to a picture, in which the bit depth transform information indicates information that is associated with bit depth transform processing performed during encoding of the picture, and the picture is one frame of pictures in the video data; and performing decoding conversion processing according to the bit depth transform information and the encoding information to generate a display picture.

According to some embodiments of the present disclosure, the decoding method further includes: parsing, from the bitstream, bit depth inverse transform information corresponding to the picture, in which the bit depth inverse transform information indicates information that is associated with bit depth inverse transform processing performed during the encoding of the picture.

According to some embodiments of the present disclosure, performing the decoding conversion processing according to the bit depth transform information and the encoding information, includes: decoding the encoding information to generate a decoded picture corresponding to the picture; performing bit depth inverse transform processing on the decoded picture with reference to the bit depth inverse transform information to generate the display picture.

According to some embodiments of the present disclosure, the bit depth transform processing is bit depth compression processing, and the bit depth inverse transform processing is bit depth expansion processing, the bit depth inverse transform information includes bit depth expansion control information, the bit depth expansion control information includes information indicating a bit depth expansion method, and the decoding method further includes: determining whether the bit depth expansion method is available; in case it is determined that the bit depth expansion method is available, expanding a bit depth according to the bit depth expansion method; and in case it is determined that the bit depth expansion method is not available, receiving the bit depth expansion method for performing bit depth expansion on the decoded picture according to the bit depth expansion method.

According to some embodiments of the present disclosure, before performing the bit depth inverse transform processing on the decoded picture, the decoding method further includes: receiving control information indicating whether to perform the bit depth inverse transform processing, and determining whether to perform the bit depth inverse transform processing on the decoded picture with reference to the control information, in which the control information is based on at least one of cases generated by: computing power of a decoder, battery information of a decoder, bit depth display requirements of a display; or parsing, from the bitstream, bit depth verification effect information corresponding to the picture, comparing the decoded picture with bit depth expansion effect information, and judging whether to perform the bit depth inverse transform processing on the decoded picture with reference to a comparison result.

According to some embodiments of the present disclosure, the bit depth transform processing is bit depth compression processing, the bit depth transform information includes bit depth compression control information indicating information that is associated with the bit depth compression processing, and performing the decoding conversion processing according to the bit depth transform information and the encoding information, includes: performing decoding conversion processing on the encoding information with reference to the bit depth compression control information.

According to some embodiments of the present disclosure, parsing, from the received bitstream, the bit depth transform information, includes: parsing the bit depth transform information from a bit depth transform extension bit in the bitstream.

According to yet another aspect of the present disclosure, the computing device is further provided, which includes: a processor, and a non-transitory memory, on which computer-readable code is stored, in which the computer-readable code, when executed by the processor, performs the encoding method for video data processing as described above, or performs the decoding method for video data processing as described above.

According to yet another aspect of the present disclosure, the computer-readable storage medium is further provided, on which instructions are stored, in which the instructions, when executed by a processor, cause a processor to implement the encoding method for video data processing as described above, or performs the decoding method for video data processing as described above.

By using the encoding method for video data, the decoding method for video data, the computing device and the medium provided by some embodiments of the present disclosure, the bit depth transform can be performed on the picture before encoding process, and then the generated transformed picture is encoded to form encoding information of the picture. It is also possible to generate bit depth transform information during the process of bit depth transform processing, and the bit depth transform information forms the bitstream together with the encoding information, so that the decoding terminal can process the bit depth of the decoded picture correspondingly according to the bit depth transform information parsed in the bitstream to satisfy such as the display requirements of the display device. The bit depth transform information transmitted in the bitstream is conducive to more flexible implementation of the bit depth transform process, and also can realize the information communication about the bit depth transform information between the decoding terminal and the encoding terminal.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG 1 is a block diagram illustrating an example video coding system capable of performing a coding method according to some embodiments of the present disclosure;
FIG 2 is a block diagram illustrating an example video encoder according to some embodiments of the present disclosure;
FIG 3 is a block diagram illustrating an example video decoder according to some embodiments of the present disclosure;
FIG 4A is a flow chart illustrating an encoding method according to some embodiments of the present disclosure;
FIG 4B is a flow chart illustrating an example method for encoding a current block using the encoding method according to some embodiments of the present disclosure;
FIG 5A is a flow chart illustrating a decoding method according to some embodiments of the present disclosure;
FIG 5B is a flow chart illustrating an example method for decoding a current block using the decoding method according to some embodiments of the present disclosure;
FIG 6A is a schematic diagram illustrating bit depth transform according to some embodiments of the present disclosure;
FIG 6B is another schematic diagram illustrating the bit depth transform according to some embodiments of the present disclosure;
FIG 7 is a schematic diagram illustrating an example application according to some embodiments of the present disclosure;
FIG 8 is a schematic diagram illustrating another example application according to some embodiments of the present disclosure;
FIG 9 is a schematic block diagram illustrating a computing device according to some embodiments of the present disclosure;
FIG 10 is a schematic diagram illustrating an architecture of a computing device according to some embodiments of the present disclosure; and
FIG 11 is a schematic diagram illustrating a non-transitory computer-readable storage medium according to some embodiments of the present disclosure.

### DETAILED DESCRIPTION

The technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

In addition, as shown in the present disclosure and the claims, unless an exception is explicitly indicated by the superior and subordinate authorities, the terms "one", "a", "a", and/or "the" are not intended to refer specifically to the singular but may also include the plural. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

Due to the increased demand for high-resolution video, video coding methods and techniques are ubiquitous in modem technology. Video codecs generally include electronic circuits or software that compress or decompress digital video, and may be continually improved to provide greater coding efficiency. A video codec converts uncompressed video into a compressed format and vice versa. Video quality, amount of data used to represent video (determined by bit rate), complexity of encoding and decoding algorithms, susceptibility to data loss and errors, ease of editing, random access, end-to-end latency (delay time) have complex relationships. Compression formats typically conform to standard video compression specifications such as High Efficiency Video Coding (HEVC) standard (also known as H.265), pending Versatile Video Coding (VVC) standard (also known as H.266), or others current and/or future video coding standards.

It can be understood that embodiments of the techniques involved in the present disclosure can be applied to existing video coding standards (eg, HEVC) and future standards to improve compression performance. The description of the coding operation in the present document may refer to existing video coding standards, and it can be understood that the methods provided in the present disclosure are not limited to the described video coding standards.

At present, in terms of video capture, camera device can generally achieve a picture capture function with a higher bit depth, such as 12bit, 14bit, or even higher. Pictures with a specific higher bit depth have better color transition effects, but take up more storage space. Correspondingly, in terms of display, there are display device supporting various bit depths on the current market. In order to adapt to the display requirements of various display devices and consider the viewing needs of consumers and the amount of data transmission, etc., it is necessary to add the bit depth processing process in the codec to flexibly process the bit depth of the picture in the codec.

Based on this, some embodiments of the present disclosure provide a coding framework, in which a processing module for transforming the bit depth of pictures in a video is added to a general codec, so that the encoding terminal and decoding terminal can be performed according to actual needs and other factors to perform operations such as bit depth compression and bit depth extension on the video, so as to reduce a bit rate under the condition of retaining color diversity to a large extent and meet the requirements of the display device for the bit depth of the video.

In general, by using the codec according to some embodiments of the present disclosure, information about bit depth transform can be generated during an encoding process, and the generated information can be transmitted to a decoding terminal in a bitstream. In the decoding process, corresponding processing can be performed according to information about bit depth transform parsed from the bitstream, such as expanding the bit depth of a decoded picture, so as to provide more flexibility in coding communication. It can be understood that, in the present disclosure, codecs with the same structure can be used for the encoding terminal and the decoding terminal.

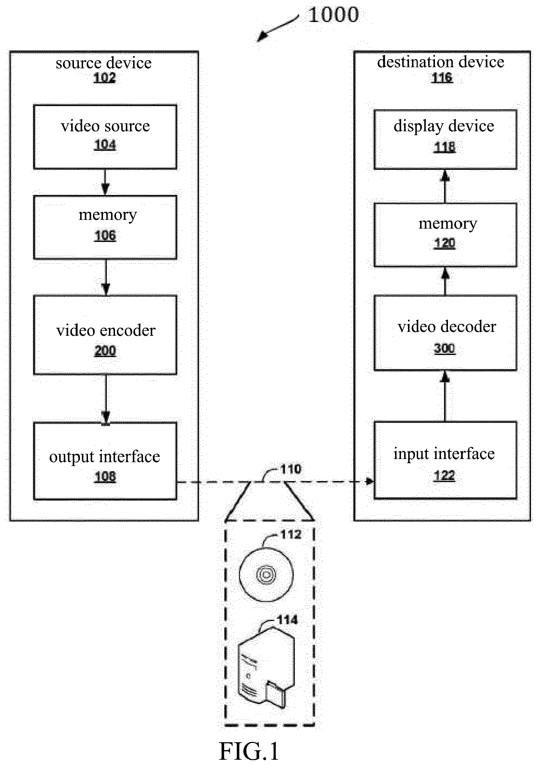

FIG 1 is a block diagram illustrating an example video coding system 1000 capable of performing a coding method according to some embodiments of the present disclosure. The techniques of the present disclosure generally relate to coding (encoding and/or decoding) video data. In general, video data includes any data used to process video, thus, video data can include unencoded raw video, encoded video, decoded (eg, reconstructed) video, and video metadata such as syntax data. A video can include one or more pictures which may be called a picture sequence.

As shown in FIG 1, in this example, a system 1000 includes a source device 102 for providing encoded video data to be decoded by a destination device 116 for display, the encoded video data being used to form a bitstream to be transmitted to a decoding terminal, in which the bitstream may also be referred to as bit stream. In particular, source device 102 provides encoded video data to destination device 116 via computer-readable medium 110. Source device 102 and destination device 116 may be implemented as a variety of devices, such as desktop computers, notebook (i.e., portable) computers, tablet computers, mobile devices, set-top boxes, smartphones, handheld phones, televisions, cameras, display devices, digital media players, video game consoles, video streaming device, etc. In some cases, source device 102 and destination device 116 may be equipped for wireless communication, and thus may also be referred to as wireless communication devices.

In the example of FIG 1, source device 102 includes a video source 104, a memory 106, a video encoder 200, and an output interface 108. Destination device 116 includes an input interface 122, a video decoder 300, a memory 120 and a display device 118. According to some embodiments of the present disclosure, the video encoder 200 of the source device 102 and the video decoder 300 of the destination device 116 may be configured to implement the encoding method and the decoding method according to some embodiments of the present disclosure. Thus, source device 102 represents an example of a video encoding device, while destination device 116 represents an example of a video decoding device. In other examples, source device 102 and destination device 116 may include other components or configurations. For example, source device 102 may receive video data from an external video source such as an external camera. Likewise, the destination device 116 may interface with an external display device without the integrated display device 118 built in.

The system 1000 shown in FIG 1 is only one example. In general, any digital video encoding and/or decoding device can execute the encoding method and decoding method according to some embodiments of the present disclosure. Source device 102 and destination device 116 are merely examples of such codec devices, where source device 102 generates a bitstream for transmission to destination device 116. This disclosure refers to a "codec" device as a device that performs data coding (encoding and/or decoding). Accordingly, the video encoder 200 and the video decoder 300 represent examples of codec devices, respectively.

In some examples, devices 102 and 116 operate in a substantially symmetrical manner such that both devices 102 and 116 include video encoding and decoding components, ie, devices 102 and 116 can both implement video encoding process and decoding process. Accordingly, system 1000 may support one-way or two-way video transmission between video devices 102 and 116, such as may be used for video streaming, video playback, video broadcasting, or video telephony communications.

In general, video source 104 represents a video data source (i.e., unencoded raw video data) and provides a continuous series of pictures (also referred to as "frames") of the video data to video encoder 200, and the video encoder 200 encodes the data of the pictures. Video source 104 of source device 102 may include a video capture device, such as a video camera, a video archive containing previously captured raw video, and/or a video feed interface for receiving video from a video content provider. As another alternative, video source 104 may generate computer graphics-based data as source video or a combination of live video, archived video and computer-generated video. In various cases, video encoder 200 encodes captured, pre-captured or computer-generated video data. Video encoder 200 may rearrange the pictures from the order in which the pictures were received (sometimes referred to as "display order") into an encoding order for encoding. Video encoder 200 may generate a bitstream including encoded video data. Then source device 102 may output the generated bitstream via output interface 108 to computer-readable medium 110 for receipt and/or retrieval, eg, by input interface 122 of destination device 116.

Memory 106 of source device 102 and memory 120 of destination device 116 represent general memory. In some examples, memory 106 and memory 120 may store raw video data, such as raw video data from video source 104 and decoded video data from video decoder 300. Additionally or alternatively, the memory 106 and the memory 120 may respectively store software instructions executable by the video encoder 200 and the video decoder 300, respectively. Although shown separately from video encoder 200 and video decoder 300 in this example, it should be understood that video encoder 200 and video decoder 300 may also include internal memory for functionally similar or equivalent purposes. Furthermore, the memory 106 and the memory 120 may store encoded video data output from the video encoder 200 and input to the video decoder 300 or the like. In some examples, portions of memory 106 and memory 120 may be allocated as one or more video caches, such as to store decoded raw video data and/or encoded raw video data.

Computer-readable medium 110 may represent any type of medium or device capable of transmitting encoded video data from source device 102 to destination device 116. In some examples, computer-readable medium 110 represents a communication medium to enable source device 102 to transmit a bitstream directly to destination device 116 in real-time via a radio frequency network, a computer network, or the like. According to a communication standard such as a wireless communication protocol, the output interface 108 can modulate transmission signals including encoded video data, and the input interface 122 can modulate received transmission signals. The communication medium may include wireless or wired communications medium, or both, such as a radio frequency (RF) spectrum or one or more physical transmission lines. The communication medium may form part of a packet-based network such as a Local Area Network, a Wide Area Network or a global network or any other kind of Internets. The communication media may include routers, switches, base stations, or any other device operable to facilitate communication from source device 102 to destination device 116.

In some examples, source device 102 may output encoded data from output interface 108 to storage device 112. Similarly, destination device 116 may access encoded data from storage device 112 via input interface 122. Storage devices 112 may include various distributed or locally accessed data storage media, such as hard drives, Blu-ray discs, digital video disc (DVD), compact disc read only memory (CD-ROM), flash memory, volatile or Non-volatile memory or any other suitable digital storage medium for storing encoded video data.

In some examples, source device 102 may output the encoded data to file server 114 or another intermediate storage device that may store encoded video generated by source device 102. Destination device 116 may access the stored video data from file server 114 via online or download means. File server 114 may be any type of server device capable of storing encoded data and transmitting the encoded data to destination device 116. File server 114 may represent a web server (eg, for a website), a file transfer protocol (FTP) server, a content delivery network device, or a network attached storage (NAS) device. Destination device 116 may access the encoded data from file server 114 over any standard data connection, including an Internet connection. This may include wireless channels such as Wi-Fi connections, wired connections such as Digital Subscriber Line (DSL) and cable modems, or a combination of wireless channels and wired connections, suitable for accessing encoded video data stored on file server 114. The file server 114 and the input interface 122 may be configured to operate according to a streaming transport protocol, a download transport protocol or a combination thereof.

Output interface 108 and input interface 122 may represent wired networking components such as wireless transmitters/receivers, modems, Ethernet cards, etc., or may represent wireless communication components operating according to any of various IEEE 802.11 standards, or other physical components. In examples where the output interface 108 and the input interface 122 include wireless components, the output interface 108 and the input interface 122 may be configured to transmit data such as encoded data according to fourth-generation mobile communication technology (4G), 4G long-term evolution (4G-LTE), LTE Advanced, the fifth-generation mobile communication technology (5G) or other cellular communication standards. In some examples where output interface 108 includes a wireless transmitter, output interface 108 and input interface 122 may be configured to transmit encoded data and other data according to IEEE 802.11 specification, IEEE 802.15 specification (for example, ZigBee ^{™}) , Bluetooth standard and other wireless standards. In some examples, source device 102 and/or destination device 116 may include corresponding system-on-chip (SoC) devices. For example, source device 102 may include a SoC device to perform functions of video encoder 200 and/or output interface 108, and destination device 116 may include a SoC device to perform functions such as video decoder 300 and/or input interface 122.

The disclosed technology may be applied to video coding supporting multiple multimedia applications, such as Internet streaming video transmission such as wireless TV broadcasting, cable TV transmission, satellite TV transmission, dynamic adaptive streaming based on HTTP, digital video encoded on data storage media, decoding of digital video stored on data storage media or other applications.

The input interface 122 of the destination device 116 receives the bitstream from the computer-readable medium 110 (eg, the storage device 112 and the file server 114, etc.). The bitstream may include signaling information defined by the video encoder 200 that is also used by the video decoder 300, such as a syntax element with a value that describe a property and/or processing of video blocks or other coding units (such as slices, pictures, picture groups and sequences, etc.).

Display device 118 displays decoded pictures of the decoded video data to a user. Display device 118 may be various types of display devices, such as cathode ray tube (CRT) based devices, liquid crystal displays (LCD), plasma displays, organic light emitting diode (OLED) displays, or other types of display devices, etc.

Although not shown in FIG 1, in some examples, video encoder 200 and video decoder 300 may each be integrated with an audio encoder and/or audio decoder, and may include appropriate multiplexing-demultiplexing (MUX-DEMUX) unit or other hardware and/or software to handle multiplexed streams including both audio and video in a common data stream. If applicable, the MUX-DEMUX unit may conform to ITU H.223 multiplexer protocol or other protocols such as User Datagram Protocol (UDP).

Both video encoder 200 and video decoder 300 may be implemented as any suitable codec circuit, such as a microprocessor, digital signal processor (DSP), application specific integrated circuit (ASIC), field programmable gate array (FPGA), discrete logic elements, software, hardware, firmware, or any combination thereof. When the techniques are implemented partially in software, a device may store instructions for the software in a suitable non-transitory computer-readable medium and execute the instructions in hardware using one or more of processors to perform the techniques of the present disclosure. Both video encoder 200 and video decoder 300 may be incorporated into one or more encoders or decoders, either of which may be integrated as a part of a combined encoder/decoder (CODEC) in a corresponding device. A device including video encoder 200 and/or video decoder 300 may be an integrated circuit, a microprocessor, and/or a wireless communication device such as a cellular telephone.

Video encoder 200 and video decoder 300 may operate according to a video coding standard, such as ITU-T H.265 (also known as High Efficiency Video Coding (HEVC)), or operate according to HEVC extensions such as multi-view and/or scalable video coding extensions. Alternatively, video encoder 200 and video decoder 300 may operate according to other proprietary or industry standards, such as the Joint Exploratory Test Model (JEM) or the Common Video Coding (VVC) standard which are currently under development. The techniques involved in the present disclosure are not limited to any particular coding standard.

In general, the video encoder 200 and the video decoder 300 may encode and decode video data expressed in YUV (eg, Y, Cb, Cr) format. That is, video encoder 200 and video decoder 300 may coding luma components and chroma components, instead of red-green-blue (RGB) data for picture samples, where chroma components may include the chroma component of red hues and blue hues. In some examples, video encoder 200 converts the received RGB formatted data to YUV format before encoding, and video decoder 300 converts the YUV format to the RGB format. Optionally, pre-processing units and post-processing units (not shown) may perform these conversions.

In general, video encoder 200 and video decoder 300 may perform a block-based coding process of pictures. The term "block" generally refers to a structure of data to be processed (eg, encoded data, decoded data, or otherwise data used in the encoding and/or decoding process). For example, a block may include a two-dimensional matrix of luma and/or chroma data samples. Generally, a picture may firstly be divided into multiple blocks for encoding processing, and a block that is undergoing coding processing in a picture may be referred to as a "current block".

In addition, embodiments of the present disclosure may also relate to coding a picture to include a process of encoding or decoding picture data. Similarly, the present disclosure may relate to encoding blocks of a picture to include a process of encoding or decoding data of the blocks, such as predictive and/or residual encoding. A bitstream resulting from the encoding processing typically includes a series of values for syntax elements that represent encoding decisions (such as encoding modes) and information about dividing a picture into blocks. Therefore, encoding a picture or a block can generally be understood as encoding values of syntax elements forming the picture or block.

HEVC defines various blocks, including coding unit (CU), prediction unit (PU), and transform unit (TU). According to HEVC, a video encoder, such as video encoder 200, partitions coding tree unit (CTU) into CUs according to a quadtree structure. That is, the video encoder partitions the CTU and CU into four equal non-overlapping blocks, and each node of the quadtree has zero or four children. Nodes with no children may be referred to as "leaf nodes," and CUs of such leaf nodes may include one or more PUs and/or one or more TUs. A video encoder can further partition PU and TU. For example, in HEVC, a residual quadtree (RQT) represents the partitioning for TU. In HEVC, PU means inter prediction data, and TU means residual data. An intra predicted CU includes intra prediction information such as an intra mode indication.

Video encoder 200 and video decoder 300 may be configured to use quadtree partitioning in accordance with HEVC, quadtree binary tree (QTBT) partitioning in accordance with JEM, or use other partitioning structures. It should be appreciated that the techniques of the present disclosure are also applicable to video encoders configured to use quadtree partitioning or other partitioning types. The video encoder 200 encodes video data of a CU representing prediction information and/or residual information and other information. The prediction information indicates how to predict the CU to form a prediction block of the CU. The residual information generally represents a sample-by-sample difference between the samples of the CU before encoding and the samples of the prediction block.

Video encoder 200 may further generate syntax data for video decoder 300, such as block-based syntax data, picture-based syntax data and sequence-based syntax data, in, for example, a picture header, block header or slice header, etc., or generate other syntax data such as a sequence parameter set (SPS), picture parameter set (PPS) or video parameter set (VPS). Video decoder 300 may likewise decode such syntax data to determine how to decode the corresponding video data.

In this way, the video encoder 200 may generate a bitstream including encoded video data, such as syntax elements describing partitioning of a picture into blocks (eg, CU) and prediction information and/or residual information for the blocks. Finally, video decoder 300 may receive the bitstream and decode the encoded video data.

In general, video decoder 300 performs a process reciprocal to that performed by video encoder 200, to decode encoded video data in a bitstream. For example, video decoder 300 may decode values of syntax elements of a bitstream in a manner substantially similar to video encoder 200. The syntax element can define the partition information of the picture as CTU, and partition each CTU according to the corresponding partition structure such as QTBT structure, so as to define the CU of the CTU. The syntax elements may further define prediction information and residual information for a block (eg, CU) of video data. The residual information may be represented by, for example, quantization transform coefficients. The video decoder 300 may perform inverse quantization and inverse transform on quantization transform coefficients of a block to reproduce a residual block of the block. The video decoder 300 uses a prediction mode (intra or inter prediction) signaled in the bitstream and associated prediction information (such as motion information for inter prediction) to form a predictive block for the block. Video decoder 300 may then combine (on a sample-by-sample basis) the prediction block and the residual block to reproduce an original block. Additionally, video decoder 300 may further perform additional processing, such as performing a deblocking process to reduce visual artifacts along block boundaries.

Some embodiments of the present disclosure provide a coding framework, adding a processing module for transforming a bit depth of a picture in a video in a general codec, so that operations, such as bit depth compression and bit depth expansion, can be performed on the pictures to be processed according to actual needs at an encoding terminal and a decoding terminal, and information about bit depth transform can be generated during an encoding process, and the generated information can be transmitted to the decoding terminal in a bitstream. In the decoding process, corresponding processing can be performed according to the information about bit depth transform which is parsed from the bitstream, such as expanding a bit depth of a decoded picture, so as to provide more flexibility in coding communication.

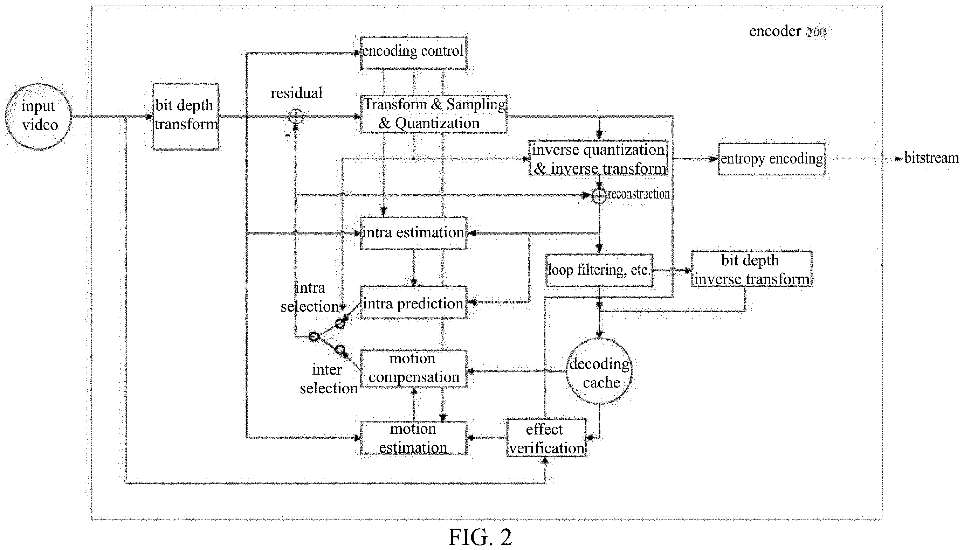

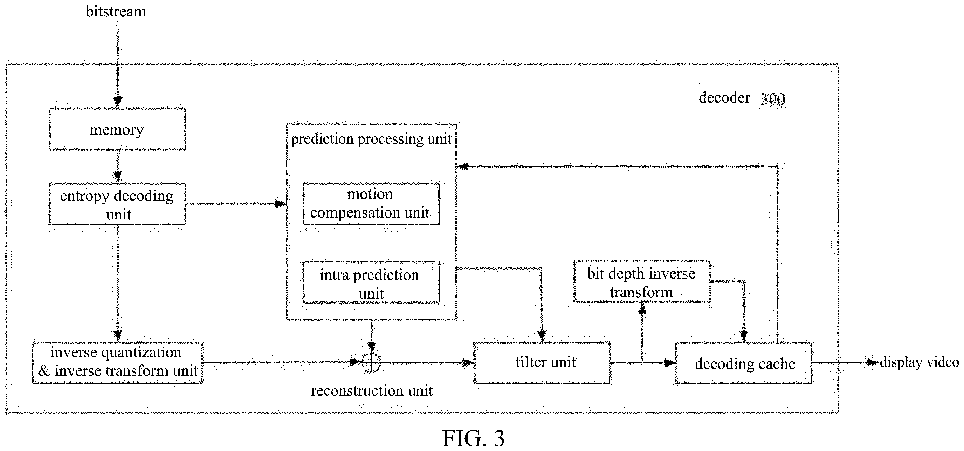

Specifically, FIG 2 is a block diagram illustrating an example video encoder according to some embodiments of the present disclosure, and correspondingly, FIG 3 is a block diagram illustrating an example video decoder according to some embodiments of the present disclosure, for example, the encoder shown in FIG 2 can be implemented as the video encoder 200 in FIG 1, and the decoder shown in FIG 3 can be implemented as the video decoder 300 in FIG 1. The codec according to some embodiments of the present disclosure will be described in detail below with reference to FIG 2 and FIG 3.

It can be understood that FIG 2 and FIG 3 are provided for purposes of explanation and should not be viewed as limitations on the techniques broadly illustrated and described in the present disclosure. For purposes of explanation, the present disclosure describes video encoder 200 and video decoder 300 in the context of a developing video coding standard, such as the HEVC video coding standard or the H.266 video coding standard, but the techniques of the present disclosure are not limited to these video coding standards.

The various units (or referred to as modules) in FIG 2 are shown to aid in understanding operations performed by video encoder 200. These units may be implemented as fixed function circuits, programmable circuits or a combination of both. Fixed function circuits are circuits that provide a specific function and are preprogrammed for executable operations. Programmable circuits refer to circuits that can be programmed to perform a variety of tasks and provide flexible functionality in executable operations. For example, a programmable circuit may execute software or firmware that causes the programmable circuit to operate in a manner defined by instructions of the software or firmware. Fixed function circuits execute software instructions (to receive parameters or output parameters, etc.), but the types of operations performed by the fixed function circuits are usually fixed. In some examples, one or more units may be different circuit blocks (fixed function circuit blocks or programmable circuit blocks), and in some examples, one or more units may be integrated circuits.

The video encoder 200 shown in FIG 2 may include an arithmetic logic unit (ALU), an elementary function unit (EFU), digital circuits, analog circuits, and/or a programmable core formed of programmable circuits. In examples where the operations of video encoder 200 are performed using software executed by programmable circuits, memory 106 (FIG 1) may store object codes of software that are received and executed by video encoder 200, or other memory (not shown) is used to store such instructions.

In the example of FIG 2, the video encoder 200 may receive an input video, for example, may receive the input video from such as a video data memory, or may directly receive the input video from a video capture device. The video data memory may store video data to be encoded by the video encoder 200 component. The video encoder 200 may receive video data stored in the video data memory, from such as video source 104 (shown in FIG 1), etc. A decoding cache can be used as a reference picture memory to store reference video data for use when the video encoder 200 predicts subsequent video data. The video data memory and decoding cache may be formed by various memory devices such as dynamic random access memory (DRAM) including synchronous DRAM (SDRAM), magnetoresistive RAM (MRAM), resistive RAM (RRAM), or other types of memory devices. The video data memory and the decoding cache may be provided by the same storage device or different storage devices. In various examples, the video data memory may be located on the same chip as other components of the video encoder 200 as shown in FIG 2, or may not be located on the same chip as other components.

In this disclosure, reference to video data memory should not be construed as limited to memory internal to video encoder 200 (unless specifically described as such), or should not be construed as limited to memory external to video encoder 200 (unless specifically described as such). More precisely, the reference to the video data memory should be understood as a reference storage for storing the video data received by the video encoder 200 for encoding (such as a video data of a current block to be encoded). In addition, the memory 106 in FIG 1 may also provide temporary storage for the output of each unit in the video encoder 200.

In some embodiments according to the present disclosure, the video encoder 200 includes a bit depth transform unit for performing bit depth transform on a video, which may be received from a video data memory, to change its bit depth. According to some embodiments of the present disclosure, the bit depth transform unit is configured to perform bit depth transform processing on pictures in the video to generate a transformed picture and generate bit depth transform information, and the bit depth transform information indicates information associated with the bit depth transform processing performed on the picture. In the embodiment according to the present disclosure, the bit depth transform information associated with the bit depth transform is entropy-encoded together with encoding information of the video data to form a bitstream to be transmitted to a decoding terminal.

As an example, in order to reduce the bit rate and reduce the amount of transmitted data, the bit depth transform unit may be implemented as a bit depth compression unit for compressing the bit depth of the video, for example, the bit depth of an original video may be 10 bits, after processing of the bit depth compression unit, the bit depth of the original video can be compressed to 8bit.

Generally, the bit depth of a video means the bit depth of pictures that are included in the video. For different bit depth values (for example, 10bit and 8bit), it can be understood that the number of bits of the color depth of the picture is different, the dynamic range is different, and the amount of stored data is different. Compared with 8bit, 10bit means that the number of color depth bits is 10 bits, which means that the picture has more color levels, color transitions are more natural, and it is less prone to color separation. Moreover, 10bit means a larger dynamic range, and the smallest signal that can be recognized at 10bit is finer. In addition, compared with 8bit, 10bit means that the amount of data that needs to be stored is larger, and the storage space required for color adjustment in the later stage is larger.

In this example, the bit depth transform processing performed by the bit depth transform unit on the picture includes utilizing a bit depth compression method to perform a bit depth compression on the picture to reduce a bit depth of the picture. The bit depth transform information includes bit depth compression control information, and the bit depth compression control information indicates information that is associated with the bit depth compression processing.

In an example where the bit depth transform unit is implemented as a bit depth compression unit, the encoder 200 may record bit depth compression control information associated with the compression processing. According to some embodiments of the present disclosure, the bit depth compression control information includes one or more of the following: information indicating the above bit depth compression method, information indicating an initial bit depth (for example, 10bit) before the bit depth compression processing, information indicating a compressed bit depth (for example, 8bit) after the bit depth compression processing, etc. Also, the above data about the bit depth compression control information may be performed entropy encoding to be written into the bitstream, so as to be transmitted to such as the video decoder 300 together with the encoding information of the video.

As another example, in order to improve the color diversity of the input video, the bit depth transform unit may also be implemented as a bit depth expansion unit for expanding the bit depth of the video, for example, the bit depth of an original video may be 10 bits, after processing of the bit depth expansion unit, the bit depth of the original video can be expanded to 12 bits. For example, this situation may be applicable to situations with high requirements on the color of the video or do not consider the amount of transmitted data.

Similarly, in an example where the bit depth transform unit is implemented as a bit depth expansion unit, the encoder 200 may record the method used for the expansion processing, and perform entropy encoding on the data that represents the expansion processing method to be written into the bitstream, so as to be transmitted to such as the video decoder 300 together with the encoding information of the video. In addition, the encoder 200 may also record the bit depth before the bit depth expansion and the bit depth after the bit depth expansion, and the above information may be used as bit depth transform information.

It can be understood that, in the method according to the embodiments of the present disclosure, the specific method for bit depth compression or expansion is not limited, and existing or future bit depth processing methods may be used to implement bit depth transform.

Next, as shown in FIG 2, after bit depth transform is performed on the input video, encoding processing may be performed on the depth-transformed video. The general encoding process will be described below with reference to FIG 2.

A mode selection unit typically coordinates multiple encoding passes to test combinations of encoding parameters and the rate-distortion values resulting from these combinations. The encoding parameters may include partitioning of CTU into CU, prediction mode of CU, transform type of residual data of CU, quantization parameter of residual data of CU, and the like. The mode selection unit may finally select an encoding parameter combination with better rate-distortion value than other tested combinations.

Video encoder 200 may partition a picture that is retrieved from video memory into a series of CTUs and pack one or more CTUs into a slice. The mode selection unit may partition the CTU of the picture according to a tree structure (such as the above-mentioned QTBT structure or the quadtree structure of HEVC). As mentioned above, video encoder 200 may form one or more CUs by partitioning a CTU according to a tree structure. Such CU may also be commonly referred to as "block" or "video block".

In general, the mode selection unit also controls its components (such as a motion estimation unit, a motion compensation unit, and an intra prediction unit) to generate a prediction block of a current block (such as the current CU or the overlapping part of PU and TU in HEVC). For inter prediction of a current block, the motion estimation unit may perform a motion search to identify one or more closely matching reference blocks in one or more reference pictures (eg, one or more decoded pictures stored in a decoding cache). Specifically, the motion estimation unit may calculate a value representing the similarity between the potential reference block and the current block, according to such as the sum of absolute differences (SAD), the sum of squares of differences (SSD), the mean absolute difference (MAD), the mean square difference (MSD), etc. The motion estimation unit may typically perform these calculations using the sample-by-sample difference between the current block and the reference block that is considered. The motion estimation unit may identify the reference block with the lower value resulting from these calculations, indicating the reference block that closely matches the current block.

The motion estimation unit may form one or more motion vectors (MV) that define a position of a reference block in a reference picture relative to a position of a current block in a current picture. The motion estimation unit may then provide the motion vectors to the motion compensation unit. For example, for unidirectional inter prediction, the motion estimation unit may provide a single motion vector, while for bidirectional inter prediction, the motion estimation unit may provide two motion vectors. The motion compensation unit may then use the motion vectors to generate a predictive block. For example, the motion compensation unit may use the motion vector to retrieve data of the reference block. As another example, if the motion vector has fractional sample precision, the motion compensation unit may interpolate the prediction block according to one or more interpolation filters. Furthermore, for bidirectional inter prediction, the motion compensation unit may retrieve data of two reference blocks identified by corresponding motion vectors, and combine the retrieved data by sample-by-sample averaging or weighted averaging, etc.

As another example, for intra prediction, an intra prediction unit may generate a prediction block from samples neighboring a current block. For example, for a directional mode, the intra prediction unit typically mathematically combines the values of neighboring samples and fills these calculated values along a defined direction on the current block to generate the prediction block. As another example, for a DC mode, the intra prediction unit may calculate an average of samples neighboring the current block, and generate a prediction block to include the resulting average for each sample of the prediction block.

The mode selection unit may provide the prediction block to a residual unit. The residual unit receives a video after a bit depth transform processing from a bit depth transform unit, and receives the prediction block from the mode selection unit. The residual unit computes a sample-by-sample difference between the current block and the prediction block. The resulting sample-by-sample difference defines a residual block of the current block. In some examples, the residual unit may also determine differences between sample values in the residual block to generate the residual block using residual differential pulse code modulation (RDPCM). In some examples, the residual unit may be formed by one or more subtractor circuits that perform binary subtraction.

In examples where the mode selection unit partitions a CU into PUs, each PU may be associated with a luma prediction unit and a corresponding chroma prediction unit. Video encoder 200 and video decoder 300 may support various PUs of different sizes. As mentioned above, the size of a CU may refer to the size of a luma encoding block of the CU, and the size of a PU may refer to the size of the luma prediction unit of the PU. Assuming that the size of a specific CU is 2N×2N, the video encoder 200 may support PU for intra prediction with a size of 2N×2N or N×N, and symmetric PU for inter prediction with a size of 2N×2N, 2N×N, N×2N, N×N, or similar sizes. Video encoder 200 and video decoder 300 may also support asymmetric partitioning of PU for inter prediction with a size of 2N×nU, 2N×nD, nL×2N, or nR×2N.

In examples where the mode selection unit does not further partition a CU into PUs, each CU may be associated with a luma encoding block and a corresponding chroma encoding block. As mentioned above, the size of a CU may refer to the size of a luma encoding block of the CU. Video encoder 200 and video decoder 300 may support CU with a size of 2N×2N, 2N×N, or N×2N.

For other video coding techniques such as intra block copy mode coding, affine mode coding and linear model (LM) mode coding, for example, the mode selection unit may generate a prediction block of a current block being encoded via a corresponding unit associated with a coding technique. In some examples, for palette mode encoding, the mode selection unit may not generate a prediction block, but instead generate syntax elements indicating a manner of reconstructing a block according to a selected palette. In such modes, the mode selection unit may provide these syntax elements to an entropy encoding unit for encoding.

As mentioned above, the residual unit receives the current block and the corresponding prediction block. The residual unit then generates the residual block of the current block. To generate the residual block, the residual unit computes the sample-by-sample difference between the prediction block and the current block.

A transform unit ("Transform & Sampling & Quantization" shown in FIG 2) applies one or more transforms to a residual block to produce a block for transform coefficient (e.g., called a "transform coefficient block"). The transform unit may apply various transforms to the residual block to form the transform coefficient block. For example, the transform unit may apply discrete cosine transform (DCT), directional transform, Karlow transform (KLT), or conceptually similar transforms to the residual block. In some examples, the transform unit may perform multiple transforms on the residual block, e.g., a primary transform and a secondary transform, such as a rotation transform. In some examples, the transform unit may not apply transforms to the residual block.

Next, the transform unit may quantize the transform coefficients in the transform coefficient block to produce a quantization transform coefficient block. The transform unit may quantize transform coefficients of the transform coefficient block according to a quantization parameter (QP) value associated with a current block. Video encoder 200 (e.g., via the mode selection unit) may adjust a degree of quantization applied to a coefficient block associated with the current block by adjusting a QP value associated with the CU. Quantization may result in loss of information, so the quantization transform coefficient may have lower precision than the original transform coefficient.

In addition, the encoder 200 may further include an encoding control unit for generating control information for operations in an encoding process. Then, an inverse quantization and inverse transform unit ("inverse quantization & inverse transform" shown in FIG 2) may respectively apply inverse quantization and inverse transform to the quantization transform coefficient block to obtain a reconstructed residual block from the transform coefficient block. A reconstruction unit may generate a reconstructed block corresponding to the current block (although possibly with some degree of distortion) based on the prediction block produced by the mode selection unit and the reconstructed residual block. For example, the reconstruction unit may add the samples of the reconstructed residual block to corresponding samples of the prediction block generated by the mode selection unit to generate the reconstructed block.

The reconstructed block may be performed a filtering processing by, for example, an in-loop filtering unit shown in FIG 2 to perform one or more filtering operations. For example, the filtering processing may include a deblocking operation to reduce blocking artifacts along CU edges. In some examples, the filtering processing may be skipped.

Then, after such as loop filtering, the video encoder 200 may store the reconstructed block in a decoding cache. In an example where the filtering processing is skipped, the reconstruction unit may store the reconstructed block in a decoding cache. In examples where filtering processing is required, the filtered reconstructed block may be stored in a decoding cache. A motion estimation unit and a motion compensation unit may retrieve reference pictures formed of the reconstructed (and possibly filtered) block from the decoding cache for inter prediction of blocks of subsequently encoded picture. Furthermore, the intra prediction unit may use the reconstructed block in the decoding cache of the current picture to perform intra prediction on other blocks in the current picture.

The operations described above are with respect to blocks, which should be understood as operating for luma encoding block and/or chroma encoding block. As mentioned above, in some examples, the luma encoding block and the chroma encoding block are the luma and chroma components of the CU. In some examples, the luma encoding block and the chroma encoding block are the luma and chroma components of the PU.

As shown in FIG 2, in some embodiments according to the present disclosure, the video encoder 200 may further include a bit depth inverse transform unit. The bit depth inverse transform unit may be configured to perform bit depth inverse transform processing on a decoded picture, for example obtained through loop filtering, to generate an inverse transformed picture and generate bit depth inverse transform information. It can be understood that the bit depth inverse transform processing and the bit depth transform processing are inverse operations, and the bit depth inverse transform information indicates information that is associated with the bit depth inverse transform processing performed on the decoded picture. Inverse operations may be understood as bit depth inverse transform processing is compressed bit depth processing when bit depth transform processing is expanded bit depth processing, or, in the case of bit depth transform processing is compressed bit depth processing, bit depth inverse transform processing is expanded bit depth processing. Alternatively, in other embodiments according to the present disclosure, the bit depth inverse transform processing and the bit depth transform processing may not be inverse operations of each other.

As an example, in the case where the bit depth transform unit is implemented as a bit depth compression unit, before encoding a picture in an input video, the bit depth transform unit first reduces a bit depth of the picture, and then performs encoding processing on the picture with the reduced bit depth. This is because although a higher bit depth picture can provide better color transition effects, it will also occupy more storage space and transmit data. In addition, considering that users of general electronic products will not use an original picture file with a higher bit depth the bit depth compression can be performed on the picture in the input video during the encoding process to reduce the bit depth of the picture in the input video, for example, from 10bit to 8bit, so that the transmission bit rate can be reduced. In this case, the bit depth inverse transform unit may be implemented as a bit depth expansion unit to increase the bit depth of the decoded picture, for example, restore the bit depth of the decoded picture from 8bit to 10bit for the subsequent effect verification unit, slightly the operation of the effect verification unit will be described later.

According to some embodiments of the present disclosure, the bit depth inverse transform information includes bit depth inverse transform control information, in which the bit depth inverse transform control information indicates information that is associated with the bit depth inverse transform processing.

According to some embodiments of the present disclosure, the bit depth inverse transform control information includes bit depth inverse transform switch information indicating whether to perform the bit depth inverse transform processing on the decoded picture. For example, the control information about the bit depth inverse transform switch information may be generated by an encoding control unit. As an example, the encoding control unit may judge whether to open the bit depth inverse transform unit according to the current computing power of an encoder, real-time display requirements, etc., that is, it is judged whether to perform bit depth inverse transform processing on the decoded picture. The bit depth inverse transform unit may determine whether to perform inverse transform processing on the decoded picture according to the control information, and record the bit depth inverse transform control information associated with the bit depth inverse transform processing, and the bit depth inverse transform control information may be entropy encoded to be transmitted to a decoding terminal.

According to some embodiments of the present disclosure, the bit depth inverse transform control information further includes at least one of the following:
information indicating the bit depth inverse transform method, information indicating an input bit depth before the bit depth inverse transform processing (for example, 8 bits),
information indicating an output bit depth after the bit depth inverse transform processing (for example, 10 bits).

According to some embodiments of the present disclosure, as shown in FIG 2, the effect verification unit may be configured to compare the inverse transformed picture (for example, 10bit) generated by the bit depth inverse transform unit with the original picture without depth transform (for example, the same 10bit) for comparison to perform the effect verification of the bit depth transform, and generate bit depth verification effect information.

According to some embodiments of the present disclosure, the bit depth verification effect information may include at least one of the following: verification control information indicating whether to perform the effect verification, information indicating an effect verification method of the effect verification, and information indicating a verification result of the effect verification method. Similarly, the bit depth verification effect information may also be entropy encoded to be transmitted to the decoding terminal.

As an example, the effect verification method may use Peak Signal to Noise Ratio (PSNR) to calculate the distortion between the generated inverse transformed picture and the original picture, and the calculated distortion value represents the effect verification information about the effect verification method.

According to some embodiments of the present disclosure, a bit depth transform extension bit (e.g., denoted as bit_convertion_extension( )) may be included in the bitstream, and the bit depth transform extension bit is used to transmit information such as bit depth transform information in the bitstream. The syntax of the bit depth transform extension bit will be described later.

In general, an entropy encoding unit may perform entropy encoding on syntax elements that is received from other functional components of video encoder 200. For example, the entropy encoding unit may perform entropy encoding on quantization transform coefficient blocks from a transform unit, and may also perform entropy encoding on information such as bit depth transform information. Furthermore, the entropy encoding unit may perform entropy encoding on prediction syntax elements from a mode selection unit, such as motion information for inter prediction or intra mode information for intra prediction, to generate entropy coded data. For example, the entropy encoding unit may perform operations on the data such as context-adaptive variable-length encoding (CAVLC) operation, context-adaptive binary arithmetic encoding (CABAC) operation, variable-length encoding operation, syntax-based context-adaptive binary arithmetic encoding (SBAC) operation, probabilistic interval partitioning entropy (PIPE) encoding operation, exponential Golomb encoding operation, or other types of entropy encoding operations. In some examples, the entropy encoding unit may operate in a bypass mode in which syntax elements are not entropy encoded. The video encoder 200 may output a bitstream including entropy encoding syntax elements required to reconstruct blocks of slices or pictures.

In the encoding method according to some embodiments of the present disclosure, bit depth processing (for example, including bit depth transform and bit depth inverse transform) may be performed on pictures in an input video, and information that is associated with the bit depth processing performed on the pictures (for example, bit depth transform information, bit depth inverse transform information, bit depth verification effect information, etc.) may be recorded, the encoder 200 may selectively perform entropy encoding on it so that it can be transmitted to the decoding terminal via the bitstream, so that the decoder 300 can use the above information parsed from the bitstream as reference information for bit depth processing at the decoding terminal. Therefore, based on the generated and transmitted information such as the bit depth transform information, the decoder may more flexibly and effectively perform bit depth transform operation on the decoded picture, so as to realize the information communication between the decoding terminal and the encoding terminal about bit depth processing. The operation of the decoder 300 will be described below in conjunction with FIG 3.

Using the encoder provided by the embodiments of the present disclosure, such as the encoder mentioned above in conjunction with FIG 2, the bit depth transform can be performed on the picture before encoding the picture, and then the generated transformed picture is encoded to form encoding information of the picture. In addition, it is also possible to generate bit depth transform information for transmission in the bitstream together with the encoding information, so that the decoder can process the bit depth of the decoded picture correspondingly according to the bit depth transform information parsed in the bitstream to satisfy such as the display requirements of the display device. Using the bit depth transform information used to form the bitstream is conducive to more flexible implementation of the bit depth transform process, and also can realize the information communication about the bit depth transform between the decoding terminal and the encoding terminal.

FIG 3 is a block diagram illustrating an example video decoder according to some embodiments of the present disclosure, for example, the decoder shown in FIG 3 may be the video decoder 300 in FIG 1. It can be understood that, FIG 3 is provided by way of explanation and not limitation of the techniques broadly illustrated and described in this disclosure. For purposes of explanation, the video decoder 300 is described according to HEVC technique. However, the disclosed techniques may be performed by video decoding devices with other video coding standards.

It can be understood that, in practical applications, the basic structure of the video decoder 300 may be similar to that of the video encoder shown in FIG2, so that both the encoder 200 and the decoder 300 include video encoding and decoding components, that is, the encoder 200 and the decoder 300 may implement video encoding and decoding processing. In this case, the encoder 200 and the decoder 300 may be collectively referred to as a codec. Therefore, the system composed of encoder 200 and decoder 300 may support one-way or two-way video transmission between devices, such as may be used for video streaming, video playback, video broadcasting or video telephony communication. It can be understood that the video decoder 300 may include more, fewer or different functional components than those shown in FIG 3. For purposes of explanation, components related to the decoding conversion process according to some embodiments of the present disclosure are shown in FIG 3.

In the example of FIG 3, the video decoder 300 includes a memory, an entropy decoding unit, a prediction processing unit, an inverse quantization and inverse transform unit ("inverse quantization & inverse transform unit" shown in FIG 3), a reconstruction unit, a filter unit, a decode cache, and a bit depth inverse transform unit. The prediction processing unit may include a motion compensation unit and an intra prediction unit. The prediction processing unit may, for example, further include an addition unit to perform prediction according to other prediction modes. As an example, the prediction processing unit may include a palette unit, an intra block copy unit (which may form part of the motion compensation unit), an affine unit, a linear model (LM) unit, and the like. In other examples, the video decoder 300 may include more, fewer or different functional components.

As shown in FIG 3, first, the decoder 300 may receive a bitstream including encoded video data. For example, the memory in FIG 3 may be referred to as a coding picture cache (CPB) to store a bitstream including the encoded video data. The bitstream is used to wait for decoding by components of video decoder 300. The video data stored in the CPB may be obtained, for example, from computer-readable medium 110 (FIG 1) or the like. In addition, the CPB may further store temporary data such as output of each unit of the video decoder 300. The decoding cache typically stores decoded pictures. When decoding subsequent data or pictures of the bitstream, the video decoder 300 may output the decoded pictures and/or use the decoded pictures as reference video data. The CPB memory and the decoding cache may be formed from various memory devices, such as dynamic random access memory (DRAM) including synchronous DRAM (SDRAM), magnetoresistive RAM (MRAM), resistive RAM (RRAM), or other types of memory devices. The CPB memory and the decoding cache may be provided by the same storage device or different storage devices. In various examples, the CPB memory may be located on the same chip as other components of the video decoder 300, as shown, or may not be located on the same chip as other components.

The various units shown in FIG 3 are shown to aid in understanding the operations performed by the video decoder 300. These units may be implemented as a fixed function circuit, a programmable circuit or a combination of both. Similar to FIG 2, the fixed function circuit refers to a circuit that provides a specific function and is preset for an executable operation. The programmable circuit refers to circuit that can be programmed to perform a variety of tasks and provide flexible functionality in an executable operation. For example, the programmable circuit may execute software or firmware that causes the programmable circuit to operate in a manner defined by instructions of the software or firmware. The fixed function circuit may execute software instructions (to receive parameters or output parameters, etc.), but the types of operations performed by the fixed function circuit are usually fixed. In some examples, one or more units may be different circuit blocks (fixed function circuit blocks or programmable circuit blocks), and in some examples, one or more units may be integrated circuits.

The video decoder 300 may include an ALU, an EFU, digital circuits, analog circuits, and/or a programmable core formed of programmable circuits. In examples where the operations of the video decoder 300 are performed by software executing on programmable circuit, on-chip or off-chip memory may store instructions (eg, object code) of the software that the video decoder 300 receives and executes.

Next, the entropy decoding unit may perform entropy decoding on the received bitstream to parse out the bit depth transform information and encoding information corresponding to the picture, the bit depth transform information indicates information that is associated with bit depth transform processing performed during encoding of the picture. According to some embodiments of the present disclosure, the decoder 300 may parse the bit depth transform information from the bit depth transform extension bit (bit_convertion_extension( )) mentioned above in the bitstream.

Next, the decoder 300 may perform decoding conversion processing according to the bit depth transform information and the parsed encoding information to generate display video data. According to some embodiments of the present disclosure, the bit depth transform processing is bit depth compression processing, and the bit depth transform information includes bit depth compression control information indicating information that is associated with the bit depth compression processing, and the performing the decoding conversion processing according to the bit depth transform information and the encoding information, includes: performing decoding conversion processing on the encoding information with reference to the bit depth compression control information. The bit depth compression control information may include at least one of the following: information indicating the bit depth compression method, information indicating an initial bit depth (for example 10 bits) before the bit depth compression processing, and information indicating a compressed bit depth (for example 8 bits) after the bit depth compression processing. In this case, based on the bit depth compression control information obtained from decoding, the decoder 300 can learn that the initial input video is encoded and transmitted after being converted from the initial 10 bits to 8 bits according to the indicated bit depth compression method. The decoder 300 may perform corresponding decoding conversion processing with reference to the transmitted bit depth compression control information.

According to some embodiments of the present disclosure, the operations that may be performed by the decoder 300 at the decoding terminal can refer to the decoding conversion processing as shown in FIG.1. The decoding conversion processing may be understood to include a combination of general decoding processing and bit depth transform processing to generate a display picture for display by a display device.

In the decoder 300 as shown in FIG 3, the entropy decoding unit may receive a bitstream including encoded video from, for example, the memory 120 and perform entropy decoding on the bitstream to reproduce syntax elements. The inverse quantization and inverse transform unit ("inverse quantization & inverse transform unit" shown in FIG 3), the reconstruction unit, and the filter unit may generate decoded video based on syntax elements extracted from the bitstream, for example, generate decoded pictures.

In general, the video decoder 300 reconstructs a picture block-by-block. The video decoder 300 may individually perform a reconstruction operation on each block, where a block currently being reconstructed (ie, decoded) may be referred to as a "current block".

Specifically, the entropy decoding unit may perform entropy decoding on the syntax elements defining a quantization transform coefficient of a quantization transform coefficient block, and transform information such as a quantization parameter (QP) and/or a transform mode indication. The inverse quantization and inverse transform unit may use the QP that is associated with the quantization transform coefficient block to determine the degree of quantization, and may also determine the degree of inverse quantization to apply. For example, the inverse quantization and inverse transform unit may perform a bitwise left shift operation to perform inverse quantization on the quantization transform coefficient. The inverse quantization and inverse transform unit may thus form a transform coefficient block including transform coefficients. After forming the transform coefficient block, the inverse quantization and inverse transform unit may apply one or more inverse transforms to the transform coefficient block to generate a residual block that is associated with the current block. For example, the inverse quantization and inverse transform unit may apply an inverse DCT, an inverse integer transform, an inverse Karo transform (KLT), an inverse rotation transform, an inverse direction transform or other inverse transforms to the coefficient block.

In addition, the prediction processing unit generates a prediction block according to a prediction information syntax element for entropy decoding by the entropy decoding unit. For example, a motion compensation unit may generate a prediction block if the prediction information syntax element indicates that the current block is inter-predicted. In this case, the prediction information syntax element may indicate a reference picture in the decoding cache (retrieve a reference block from the reference picture), and a motion vector identifying the position of the reference block in the reference picture relative to the current block in the current picture. The motion compensation unit may generally perform the inter prediction processing in a manner substantially similar to that described with respect to the motion compensation unit in FIG 2.

As another example, if the prediction information syntax element indicates that the current block is intra-predicted, the intra prediction unit may generate the prediction block according to an intra prediction mode indicated by the prediction information syntax element. Likewise, the intra prediction unit may generally perform the intra prediction processing in a manner substantially similar to that described with respect to the intra prediction unit in FIG 2. The intra prediction unit may retrieve data of neighboring samples of the current block from the decoding cache.

The reconstruction unit may reconstruct the current block using the prediction block and the residual block. For example, the reconstruction unit may add samples of the residual block to corresponding samples of the prediction block to reconstruct the current block.

The filter unit may then perform one or more filtering operations on the reconstructed block. For example, the filter unit may perform a deblocking operation to reduce blocking artifacts along reconstructed block edges. It can be understood that the filtering operation need not be performed in all examples, ie, the filtering operation may be skipped in some cases.

The video decoder 300 may store the reconstructed block in the decoding cache. As mentioned above, the decoding cache may provide reference information to units such as motion compensation unit and motion estimation unit, such as samples of the current picture for intra prediction and samples of a previously decoded picture for subsequent motion compensation. Additionally, the video decoder 300 may output decoded pictures from the decoding cache for subsequent presentation on a display device (eg, display device 118 of FIG 1).

According to some embodiments of the present disclosure, the video decoder 300 may further include a bit depth inverse transform unit for performing bit depth inverse transform processing on decoded pictures, such as loop-filtered pictures, to adapt to the requirements of a display device for the bit depth of the displayed video. As an example, in the case that the display device used to display an output video requires displaying display data with 10 bits, and the bit depth of the decoded picture obtained by decoding is 8 bits, the bit depth inverse transform unit may be used to perform inverse transform on the bit depth of the decoded picture to increase the bit depth of the decoded picture and provide bit depth processed video data as display data. The bit depth inverse transform operation during the decoding conversion process will be described in detail below.

According to some embodiments of the present disclosure, the entropy decoding unit of the decoder 300 may also parse the bit depth inverse transform information corresponding to the picture from the bitstream, the bit depth inverse transform information indicates information that is associated with bit depth inverse transform processing performed during encoding of the picture. According to some embodiments of the present disclosure, the decoder 300 may parse the bit depth inverse transform information from the above-mentioned bit depth transform extension bit in the bitstream.

In this case, performing the decoding conversion processing according to the bit depth transform information and the encoding information includes: decoding the encoding information to generate a decoded picture corresponding to the picture; performing bit depth inverse transform processing on the decoded picture with reference to the bit depth inverse transform information to generate the display picture.

In the following description, the case where the bit depth transform processing at the encoding terminal is the bit depth compression processing, and the bit depth inverse transform processing is the bit depth expansion processing is taken as a specific example, and the corresponding operations performed by the decoder at the decoding terminal are described below. It can be understood that the decoding method according to the embodiment of the present disclosure is not limited to this situation.

In the above example, the bit depth inverse transform information includes bit depth expansion control information, and the bit depth expansion control information includes information indicating a bit depth expansion method, and the decoder 300 may further determine whether the bit depth expansion method local to the decoder is available, that is, the decoder 300 may firstly determine whether it can perform the bit depth expansion method indicated in the bit depth expansion control information by itself. In case it is determined that the bit depth expansion method is available, the decoder 300 may expand the bit depth of the decoded picture according to the bit depth expansion method, for example, the decoder 300 may increase the bit depth of the decoded picture from 8 bits to 10 bits. Or, in case it is determined that the bit depth expansion method is not available, the decoder 300 may further receive the bit depth expansion method from, for example, an application layer, to perform bit depth expansion on the decoded picture according to the bit depth expansion method. It can be understood that the above process may be applied to the situation where the bit depth expansion method configured in the decoder is inconsistent with the indicated bit depth expansion method. In this case, the decoder 300 may receive data about the indicated bit depth expansion method form the application layer or a cloud, such as via a network, to enable the decoder 300 perform the indicated bit depth expansion method on the decoded picture.

According to some embodiments of the present disclosure, the decoder 300 may further receive control information indicating whether to perform bit depth inverse transform processing, the control information is generated based on at least one of the following: computing power of a decoder, battery information of a decoder, bit depth display requirements of a display. According to the received control information, the decoder 300 may determine whether to enable a bit depth inverse transform unit configured therein, and if the control information indicates not to enable, the decoder 300 does not perform bit depth inverse transform processing on the loop-filtered decoded picture.

In addition, or optionally, the decoder 300 may further parse, from the above-mentioned bit depth transform extension bit in the bitstream, bit depth verification effect information corresponding to the picture, and compare the decoded picture with bit depth expansion effect information, and judge whether to perform the bit depth inverse transform processing on the decoded picture with reference to a comparison result.

Thus, the decoder 300 may determine whether to enable the bit depth inverse transform unit according to the control information received from the application layer about whether to perform bit depth inverse transform processing and/or according to the bit depth verification effect information obtained from parsing the bitstream.

In addition, the decoder 300 may further determine whether to perform inverse transform according to the indicated bit depth inverse transform method according to the bit depth expansion effect information. As an example, the bit depth expansion effect information may include at least one of the following: verification control information indicating whether to perform the effect verification, information indicating an effect verification method of the effect verification, and information indicating a verification result of the effect verification method.

As an example, according to the information indicating the verification result of the effect verification method, the decoder 300 can learn the transform effect achieved by using the bit depth inverse transform method to perform the bit depth inverse transform, so as to determine whether to continue to use this method to perform bit depth inverse transform at the decoding terminal according to the transform effect. For example, assuming that the transform effect shows that the converted decoded picture is more distorted than an original picture, the decoder side may not use the bit depth inverse transform method for inverse transform, but use other methods (for example, a method indicated by the application layer) to perform the inverse transform.

Thus, based on information transmitted in the bitstream about the bit depth processing that is performed on the picture during encoding conversion process, the decoder 300 can learn more useful information to perform bit depth transform more flexibly.

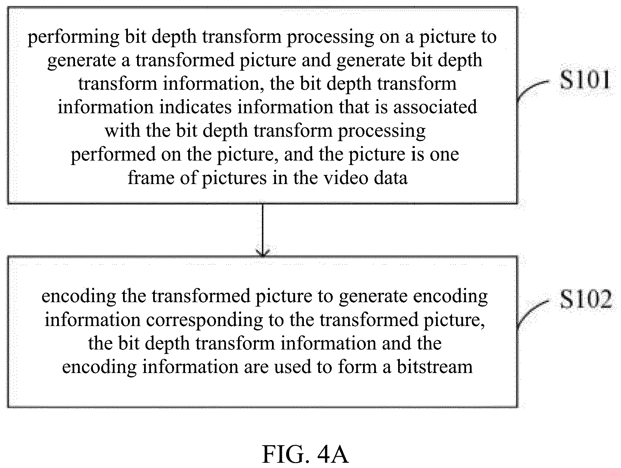

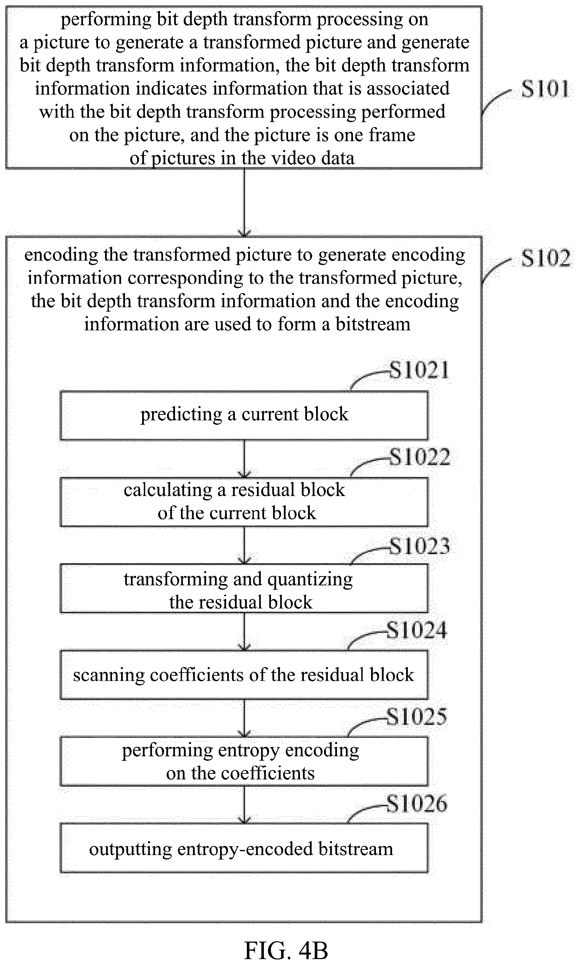

FIG 4A is a flow chart illustrating an encoding method according to some embodiments of the present disclosure, and FIG 4B is a flow chart illustrating an example method for encoding a current block using an encoding method according to some embodiments of the present disclosure. Although described with respect to the video encoder 200 in conjunction with FIG 1 and FIG 2, it can be understood that other devices may also be configured to perform encoding methods similar to those shown in FIG 4A and FIG 4B.

As shown in FIG 4A, the encoding method according to some embodiments of the present disclosure includes steps S101 and S102. In step S101, performing bit depth transform processing on a picture to generate a transformed picture and generate bit depth transform information, the bit depth transform information indicates information that is associated with the bit depth transform processing performed on the picture. It can be understood that the picture is one frame of pictures in the video data.

For example, this step S101 may be performed by the bit depth transform unit shown in FIG 2 to process the bit depth of the picture sequence in the input video, to change the bit depth of the picture.

As an example, in order to reduce bit rate and reduce the amount of data to be transmitted, the bit depth transform unit may be implemented as a bit depth compression unit for compressing the bit depth of the video. For example, the bit depth of the original video is 10 bits. The bit depth of the original video may be compress to 8 bits after the processing of the bit deep compression unit. In this example, the bit depth transform information includes bit depth compression control information, and the bit depth compression control information indicates information that is associated with the bit depth compression processing.

According to some embodiments of the present disclosure, the bit depth compression control information includes at least one of the following: information indicating the bit depth compression method, information indicating an initial bit depth before the bit depth compression processing, information indicating a compressed bit depth after the bit depth compression processing.

As another example, in order to improve the color diversity of the input video, the bit depth transform unit may also be implemented as a bit depth expansion unit for expanding the bit depth of the video. For example, the bit depth of the original video is 10 bits. The bit depth of the original video may be compress to 12 bits after the processing of the bit deep expansion unit. In this example, the bit depth transform information includes bit depth expansion control information, and the bit depth expansion control information indicates information that is associated with bit depth expansion processing. According to some embodiments of the present disclosure, the bit depth expansion control information includes at least one of the following: information indicating the bit depth expansion method, information indicating an initial bit depth before bit depth expansion processing, information indicating compression bit depth after bit depth expansion processing.

Next, in step S102, encoding the transformed picture to generate encoding information corresponding to the transformed picture. According to some embodiments of the present disclosure, the bit depth transform information and the encoding information are used to form a bitstream, that is, the generated bit depth transform information and the encoding information may be transmitted to the decoding terminal to provide more flexibility in coding communication regarding bit depth processing.

For step S102, it may specifically include steps S1021-S1026 as shown in FIG 4B. As shown in FIG 4B, such as the video encoder 200 may first predict a current block (S1021). For example, the video encoder 200 may form a prediction block of the current block. The video encoder 200 may then calculate a residual block of the current block (S1022). To calculate the residual block, the video encoder 200 may calculate a difference between an original unencoded block and the prediction block of the current block. The video encoder 200 may then transform and quantize coefficients of the residual block (S 1023). Next, the video encoder 200 may scan quantization transform coefficients of the residual block (S1024). During or after scanning, the video encoder 200 may perform entropy encoding on the coefficients (S1025). For example, the video encoder 200 may perform entropy encoding on coefficients using CAVLC or CABAC. Finally, the video encoder 200 may output the entropy-encoded bitstream (S 1026).

According to some embodiments of the present disclosure, the process of encoding may be understood as including a decoding step, so as to generate decoded pictures for motion estimation, motion compensation, and the like. The process of obtaining the decoded picture may include: decoding the encoding information to generate the decoded picture.

Optionally, the encoding method according to some embodiments of the present disclosure may further include performing bit depth inverse transform processing on the decoded picture to generate an inverse transformed picture and generate bit depth inverse transform information, the bit depth inverse transform processing and the bit depth transform processing in step S 101 are inverse operations, and the bit depth inverse transform information indicates information that is associated with the bit depth inverse transform processing performed on the decoded picture. As an example, the bit depth transform processing may be bit depth compression processing, and the bit depth inverse transform processing may be bit depth expansion processing. It can be understood that, as another example, bit depth transform processing may also be bit depth expansion processing, and bit depth inverse transform processing may be bit depth compression processing.

The encoding method according to some embodiments of the present disclosure may further include: comparing the inverse transformed picture with the picture to perform effect verification to generate bit depth verification effect information, in which the bit depth verification effect information includes at least one of cases below: verification control information indicating whether to perform the effect verification, information indicating an effect verification method of the effect verification, and information indicating a verification result of the effect verification method.

According to some embodiments of the present disclosure, the bit depth inverse transform information includes bit depth inverse transform control information, the bit depth inverse transform control information indicates information that is associated with the bit depth inverse transform processing. As an example, the bit depth inverse transform control information may include bit depth inverse transform switch information, and indicate whether to perform bit depth inverse transform processing on the decoded picture. For example, the indication about the bit depth inverse transform switch information may be generated by the encoding control unit in FIG 2.

According to some embodiments of the present disclosure, performing the bit depth inverse transform processing on the decoded picture includes: in response to the bit depth inverse transform switch information indicating that the bit depth inverse transform processing is performed, bit depth utilizing a bit depth inverse transform method to perform a bit depth inverse transform on the decoded picture, which is used for changing a bit depth of the decoded picture in a direction opposite to the bit depth transform.

As an example, the bit depth inverse transform control information may further include at least one of the following: information indicating the bit depth inverse transform method, information indicating an input bit depth before the bit depth inverse transform processing, information indicating an output bit depth after the bit depth inverse transform processing.

According to some embodiments of the present disclosure, in order to transmit one or more kinds of information about bit depth processing (for example, bit depth transform information, bit depth inverse transform information, and bit depth verification effect information) in the bitstream, the bit depth transform extension bit is included in the bitstream to transmit such information in the bitstream, so that after receiving the bitstream, the decoder obtains the above-mentioned information from the bit depth transform extension bit.

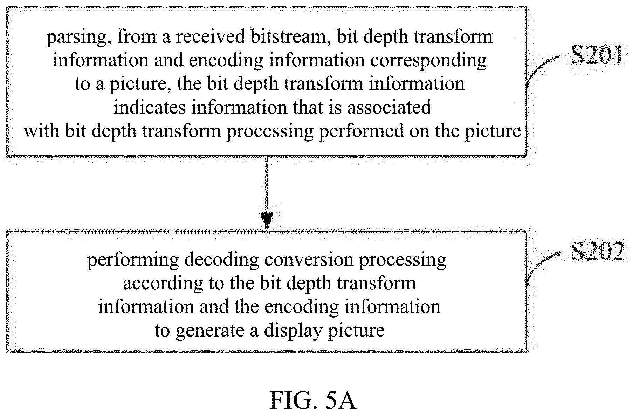

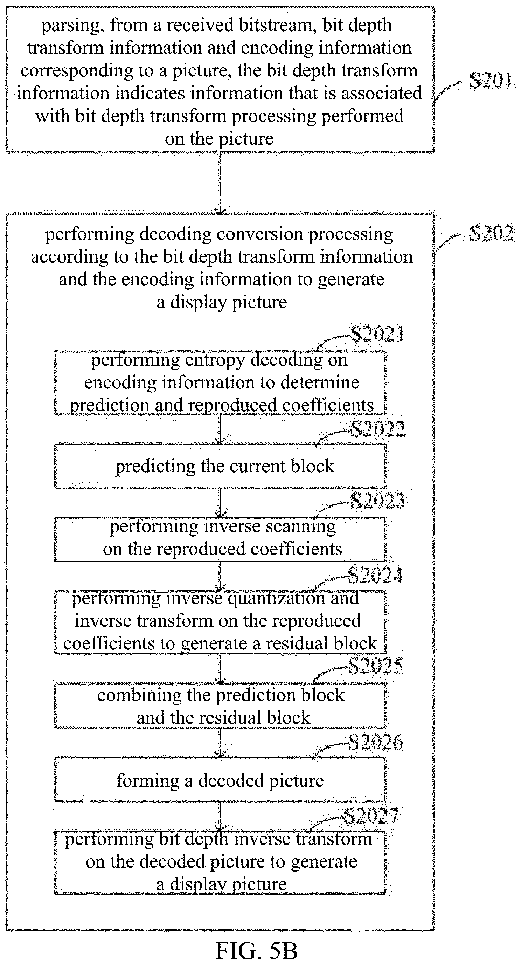

FIG 5A is a flow chart illustrating a decoding method according to some embodiments of the present disclosure, and FIG 5B is a flow chart illustrating an example method of decoding a current block by using a decoding method according to some embodiments of the present disclosure. Although described with respect to the video decoder 300 in conjunction with FIG 1 and FIG 3, it can be understood that other devices may also be configured to perform decoding methods similar to those shown in FIG 5A and FIG 5B.

As shown in FIG 5A, the decoding method according to some embodiments of the present disclosure includes steps S201 and S202. In step S201, parsing, from a received bitstream, bit depth transform information and encoding information corresponding to a picture, the bit depth transform information indicates information that is associated with bit depth transform processing performed during encoding of the picture. For example, step S101 may be performed by the entropy decoding unit shown in FIG 3, the obtained bit depth transform information may be used as reference information for processing such as the bit depth of a decoded picture to change the bit depth of the picture, resulting in a display picture with the desired bit depth. As an example, the entropy decoding unit in FIG 3 may parse the above bit depth transform information from the bit depth transform extension bit in the bitstream.

Next, in step S202, performing decoding conversion processing according to the bit depth transform information and the encoding information to generate a display picture.

According to some embodiments of the present disclosure, the bit depth transform processing may be bit depth compression processing, and the bit depth transform information includes bit depth compression control information. This indicates that during the encoding process of the encoder 200, the bit depth transform unit performs bit depth compression processing on the picture sequence in the input video to reduce the bit depth of the picture.

According to some embodiments of the present disclosure, performing the decoding conversion processing according to the bit depth transform information and the encoding information includes: performing decoding conversion processing on the encoding information with reference to the bit depth compression control information. The bit depth compression control information may include at least one of the following: information indicating a bit depth compression method, information indicating an initial bit depth (for example, 10 bits) before bit depth compression processing, and information indicating a compressed bit depth (For example, 8 bits) after bit depth compression processing. In this case, the decoder 300 can learn that the initial input video is encoded and transmitted after being converted from the initial 10 bits to 8 bits according to the indicated bit depth compression method based on the above-mentioned bit depth compression control information obtained through decoding.

The decoding method according to some embodiments of the present disclosure may further include parsing, from the bitstream, bit depth inverse transform information corresponding to the picture, the bit depth inverse transform information indicates information that is associated with bit depth inverse transform processing performed during encoding of the picture.

According to some embodiments of the present disclosure, performing the decoding conversion processing according to the bit depth transform information and the encoding information includes: decoding the encoding information to generate a decoded picture corresponding to the picture; performing bit depth inverse transform processing on the decoded picture with reference to the bit depth inverse transform information to generate the display picture.

According to some embodiments of the present disclosure, the bit depth transform processing is bit depth compression processing, and the bit depth inverse transform processing is bit depth expansion processing, the bit depth inverse transform information includes bit depth expansion control information, and the bit depth expansion control information includes indication information indicating the bit depth expansion method, the decoding method may further include: determining whether the bit depth expansion method is available; in case it is determined that the bit depth expansion method is available, expandimg a bit depth according to the bit depth expansion method; and in case it is determined that the bit depth expansion method is not available, receiving the bit depth expansion method for performing bit depth expansion on the decoded picture according to the bit depth expansion method.

According to some embodiments of the present disclosure, before performing bit depth inverse transform processing on the decoded picture, the decoding method may further include: receiving control information indicating whether to perform the bit depth inverse transform processing, the control information is based on at least one of cases generated by: computing power of a decoder, battery information of a decoder, bit depth display requirements of a display; and referring to the control information to determine whether to perform bit depth inverse transform processing on the decoded picture.

According to some embodiments of the present disclosure, before performing bit depth inverse transform processing on the decoded picture, the decoding method may further include: parsing, from the bitstream, bit depth verification effect information corresponding to the picture, comparing the decoded picture with bit depth expansion effect information, and judging whether to perform the bit depth inverse transform processing on the decoded picture with reference to a comparison result.

As shown in FIG 5B, it specifically shows an example process of step S202, including steps S2021-S2027. For example, the video decoder 300 may perform entropy decoding on received encoding information to determine prediction information of a current block and reproduce coefficients of a residual block (S2021). The video decoder 300 may predict the current block by using an intra or inter prediction mode, etc. indicated by the current block prediction information (S2022), to calculate a prediction block of the current block. The video decoder 300 may then perform inverse scanning on the reproduced coefficients (S2023) to create a quantization transform coefficient block. The video decoder 300 may then perform inverse quantization and inverse transform on the coefficients to generate a residual block (S2024). The video decoder 300 may combine the prediction block and the residual block (S2025), and finally form a decoded picture (S2026).

According to the following embodiments of the present disclosure, the video decoder 300 may further selectively perform bit depth inverse transform on the decoded picture to generate a display picture (S2027). For example, the decoder 300 may receive control information indicating whether to perform bit depth inverse transform processing from the application layer, to determine whether to enable the bit depth inverse transform unit therein. For another example, the decoder 300 may parse the bit depth verification effect information corresponding to the picture from the bitstream, to determine whether to enable the bit depth inverse transform unit therein according to the verification effect information. It can be understood that the decoder 300 may further comprehensively refer to both the above received control information and the bit depth verification effect information parsed from the bitstream to determine whether to enable the bit depth inverse transform unit.

If it is determined to enable the bit depth inverse transform unit, a bit depth inverse transform operation may be performed on the generated decoded picture, to change the bit depth of the decoded picture. As an example, the bit depth inverse transform unit may be implemented as a bit depth compression unit to reduce the bit depth of the decoded picture. As another example, the bit depth inverse transform unit may be implemented as a bit depth expansion unit to increase the bit depth of the decoded picture.

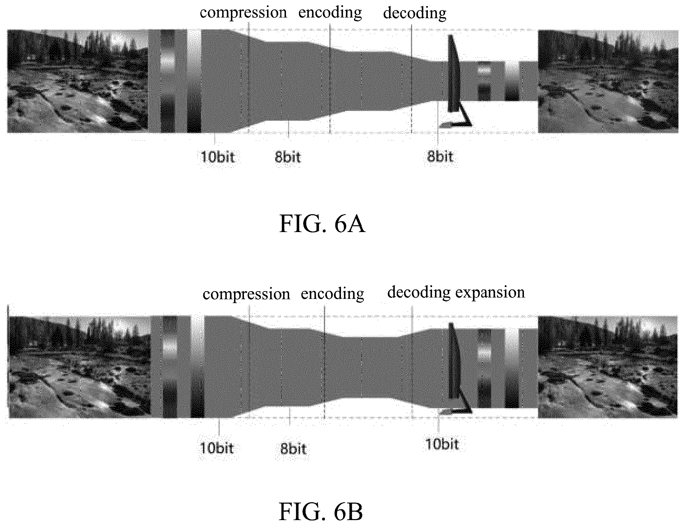

As an example, FIG 6A is a schematic diagram illustrating bit depth transform according to some embodiments of the present disclosure. As shown in FIG 6A, video such as captured by a camera device may have a bit depth of 10 bits. As an input video, the video with a bit depth of 10 bits may first be compressed by the bit depth transform unit of the encoder 200 as shown in FIG 2 to reduce the bit depth to 8 bits for encoding and transmission. Compared with directly encoding video with 10 bits, this method can reduce the amount of data transmission. At the same time, information about bit depth processing is also transmitted in the bit depth extension bit in the bitstream to realize the communication of bit depth information between codecs. Next, at the decoding terminal, the decoder 300 may perform decoding processing on the encoding information to obtain a decoded video, which has a bit depth of 8 bits, and according to the above-mentioned received control information indicating whether to perform bit depth inverse transform processing and/or bit depth verification effect information parsed from the bitstream to determine whether to perform bit depth inverse transform on the decoded video. FIG 6A shows a situation in which bit depth inverse transform is not performed on the decoded video, thus the decoded video may be directly used as display data.

Fig. 6B is a schematic diagram of another bit depth transform, in which it shows the situation of performing bit depth inverse transform on the decoded video; through inverse transform, the bit depth of the decoded video may be processed, for example, up to 10 bits for display. It can be understood that FIG 6A and FIG 6B only show an example application situation of performing bit depth transform by using the encoding method and the decoding method according to the embodiments of the present disclosure.

The following uses some examples to describe the syntax of the above-mentioned bit depth transform extension bit (bit_convertion_extension()) in the embodiments of the present disclosure. Syntax elements related to some embodiments of the present disclosure are shown in bold. It can be understood that the following tables are only illustrative, and other grammars may also be defined.

**Table 1 Syntax for extension data definition**

| extension data definition | descriptor |
|---|---|
| extension_data(i) { | |
| while (next_bits(32) == extension_start_code) { | |
| extension_start_code | f(32) |
| if (i == 0) { | |
| if (next_bits(4) == '0010') | |
| sequence_display_extension() | |
| else if (next_bits(4) == '00 11') | |
| temporal_scalability_extension( ) | |
| else if (next_bits(4) == '0100') | |
| copyright_extension( ) | |
| else if (next_bits(4) == '0110') | |
| cei_extension( ) | |
| else if (next_bits(4) == '1010') | |
| mastering_display_and_content_metadata_extension( ) | |
| else if (next_bits(4) =='1011') | |
| camera_parameters_extension() | |
| else if (next_bits(4) =='1101') | |
| cross_random_access_point_reference_extension( ) | |
| else | |
| while (next_bits(24) != '0000 0000 0000 0000 0000 0001') | |
| reserved_extension_data_byte | u(8) |
| } | |
| } | |
| else { | |
| if (next_bits(4) == '0100') | |
| copyright_extension( ) | |
| else if ( next_bits(4) == '0101' ) | |
| hdr_dynamic_metadata_extension( ) | |
| else if (next_bits(4) =='0111') | |
| picture_display_extension( ) | |
| else if (next_bits(4) =='1011') | |
| camera_parameters_extension() | |
| else if (next_bits(4) == '1100') | |
| roi_parameters_extension( ) | |
| **else if (next_bits(4) == 'xxxx')** /* bit depth transform extension bit */ | |
| **bit_conversion_extension( )** | |
| else { | |
| while (next_bits(24) != '0000 0000 0000 0000 0000 0001') | |
| reserved_extension_data_byte | u(8) |
| } | |
| } | |
| } | |
| } | |

As shown in Table 1, bit depth transform extension bit is defined in the extension data.

**Table 2 Syntax for bit depth transform extension bit definition**

| | |
|---|---|
| Bit transform extension definition | descriptor |
| bit_convertion_extension( ) { | |
| **extension_id** | f(4) |
| **extension_id** | f(4) |
| **bitDepthExpansionModuleSwitchOnOff** | u(1) |
| if (bitDepthExpansionModuleSwitchOnOff) { | |
| bitDepthDownScaleMethod | u(3) |
| bitDepthExpansionMethod | u(3) |
| } | |
| if (bitDepthDownScaleMethod != '000') { | |
| **bitconvertion_origin** | u(2) |
| **bit**_**convertion_taiget** | u(2) |
| } | |
| if (bitDepthExpansionMethod != '000') { | |
| **bit_convertion_input** | u(2) |
| **bit_convertion_output** | u(2) |
| **bitDepthExpansionEffect** | u(1) |
| } | |
| if (bitDepthExpansionEffect) { | |
| **expansion_eval_method** | u(3) |
| **expansion**_**eval_effect** | u(8) |
| } | |
| } | |
| next_start_code( ) | |
| } | |

In Table 2, bitDepthExpansionModuleSwitchOnOff specifies the bit depth inverse transform switch information, for example, bitDepthExpansionModuleSwitchOnOff equal to 1 specifies to enable the bit depth inverse transform unit in the encoder, and bitDepthExpansionModuleSwitchOnOff equal to 0 specifies to disable the bit depth inverse transform unit.

bitDepthDownScaleMethod specifies the method used to compress the bit depth of the picture during the encoding conversion process. For example, the bit depth compression method may be represented by a 3-bit unsigned integer.

As an example, Table 3 shows the index meanings for bitDepthDownScaleMethod, which shows several compression methods. It can be understood that the above compression methods are only examples, and other compression methods may also be defined. For example, if the index of bitDepthDownScaleMethod is 001, it means that the LTM compression method is used in the encoder. For another example, if the index of bitDepthDownScaleMethod is 000, it means that no bit depth compression method is used in the encoder.

**Table 3 index meanings for bitDepthDownScaleMethod**

| bitDepthDownScaleMethod | | | meaning |
|---|---|---|---|
| | 000 | not used | |
| | 001 | Logarithmic, LTM | |
| | 010 | Modified logarithmic, MLTM | |
| | 011 | Exponential, ETM | |
| | 100 | Modified exponential, METM | |
| 101 | Reinhard global operator, RGTM | | |
| 110 | Reinhard local operator, RLTM | | |
| 111 | | retain | |

For the bit depth compression processing, bit_convertion_origin and bit_convertion_taiget may further be defined to represent the initial bit depth before the bit depth compression processing and the bit depth after the compression processing, respectively. For definitions of bit depths, reference may be made to the 3-bit unsigned integers shown in Table 4 below, respectively. As an example, bit_convertion_origin equal to 001 indicates that the initial bit depth is 10 bits, and bit_convertion_taiget equal to 000 indicates that the bit depth after compression processing is 8 bits.

**Table 4 index meanings for bitDepth**

| bitDepth | meaning |
|---|---|
| 000 | 8bit |
| 001 | 10bit |
| 010 | 12bit |
| 011 | 14bit |
| 100 ∼ 111 | retain |

Next, the bitDepthExpansionMethod in Table 2 specifies the method used for the bit depth expansion processing on the picture during the encoding conversion processing. For example, the bit depth expansion method may be represented by a 3-bit unsigned integer.

As an example, Table 5 shows index meanings for bitDepthExpansionMethod, which shows several expansion methods. It can be understood that the above expansion methods are only examples, and other expansion methods may also be defined. For example, if the index of bitDepthExpansionMethod is 001, it means that the expansion method of zero padding (ZP) is used in the encoder. For another example, if the index of bitDepthDownScaleMethod is 000, it means that no bit depth expansion method is used in the encoder. In addition, "XXX" is also shown in Table 5 to define other possible expansion methods.

**Table 5 index meanings for bitDepthExpansionMethod**

| bitDepthExpansionMethod | meaning |
|---|---|
| 000 | not used |
| 001 | Zero Padding, ZP |
| 010 | Multiplication by-an-ideal-gain, MIG |
| 011 | Bit Replication, BR |
| 100 | XXX |
| 101 | XXX |
| 110 | XXX |
| 111 | retain |

For the bit depth expansion processing, bit_convertion_input and bit_convertion_output may further be defined to represent an input bit depth before the bit depth expansion processing and an output bit depth after the expansion processing, respectively. For the indexes of bit_convertion_input and bit_convertion_output, please refer to the Table 4.

Next, the bitDepthExpansionEffect in Table 2 specifies the verification control information whether to perform effect verification. For example, bitDepthExpansionEffect equal to 1 specifies that the effect verification processing is performed, and bitDepthExpansionEffect equal to 0 specifies that the effect verification processing is not performed.

Next, expansion_eval_method in Table 2 specifies a method of performing an effect, and as an example, the following Table 6 shows index meanings for expansion_eval_method. It can be understood that the verification methods shown in Table 6 are only examples, and other methods may also be defined. For example, if the index of expansion_eval_method is 000, it means that the PSNR verification method is used in the encoder. For another example, if the index of expansion_eval_method is 001, it means that the picture structure similarity algorithm (Structural Similarity, SSIM) is used in the encoder. In addition, "XXX" is also shown in Table 6 to define other possible verification methods. Next, expansion_eval_effect in Table 2 specifies the result information of the effect verification.

**Table 6 index meaning for Expansion_eval_method**

| expansion_eval_method | meaning |
|---|---|
| 000 | PSNR |
| 001 | SSIM |
| 010 | XXX |
| 011 | XXX |
| 100 - 111 | retain |

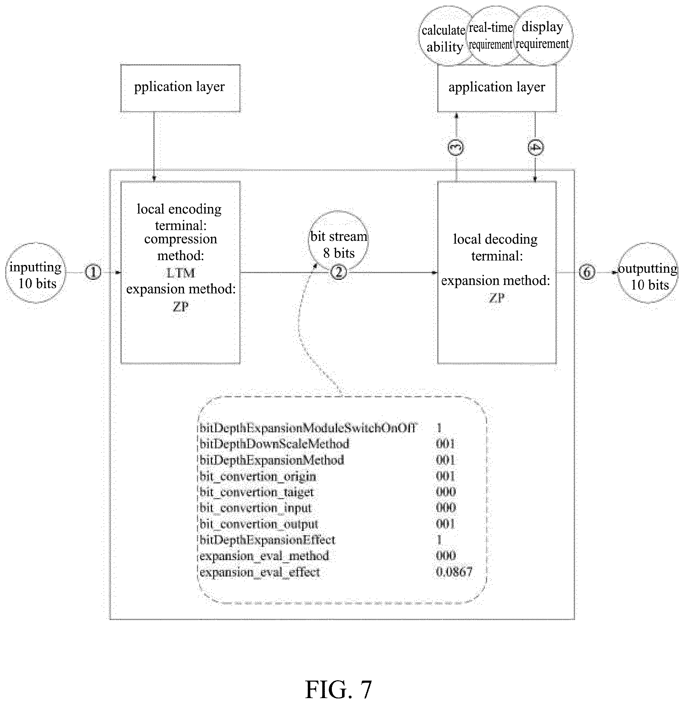

Fig. 7 is a schematic diagram illustrating an example application according to some embodiments of the present disclosure, which shows an example application process of video processing by using an encoding method or a decoding method according to some embodiments of the present disclosure, and schematically shows use of the syntax elements defined in the table.

As shown in FIG 7, firstly, an input video is received by an encoder such as the encoder 200 at the encoding terminal, and the picture sequence of the input video has an initial bit depth of 10 bits. Next, the encoder 200 compresses the bit depth of the input video using a bit depth compression method (LTM) to compress the bit depth to 8 bits, and encodes the compressed video to form a bitstream. Further, during the decoding process in the encoder 200, bit depth expansion processing is further enabled to restore the compressed video to the original 10 bits according to the ZP expansion method. For the restored video data and the original input video, PSNR is used to check the effect to determine the degree of picture distortion.

According to some embodiments of the present disclosure, bit depth transform extension bit is defined in the generated bitstream to be used for transmitting the above information about bit transform processing in the encoding transform process in the bitstream, and the syntax elements and indexes of the syntax elements included therein are as follows FIG 7 shows.

Such as the decoder 300 at the decoding terminal may receive the above bitstream including bit depth transform extension bit, and parse relevant information from the bit depth transform extension bit, so that the decoder 300 may refer to the indicated information to perform corresponding bit depth inverse transform on the decoded video, for example, according to the indicated expansion method ZP, the decoder 300 expands the bit depth of the decoded video to obtain an output video with a bit depth of 10 bits, and displays the expanded video. As an example, the decoder 300 may receive control information, indicating whether to perform bit depth inverse transform processing, from the application layer, for example, the control information is generated based on the computing power of a decoder, battery information of a decoder, bit depth display requirements of a display, etc. Thus, the decoder 300 may determine whether to perform bit depth transform processing on the decoded video according to the current decoding requirement.

FIG 7 shows a situation where the decoder 300 determines that the indicated bit depth expansion method ZP is available, and the decoder 300 may directly expand the bit depth of the decoded video according to the indicated expansion method.

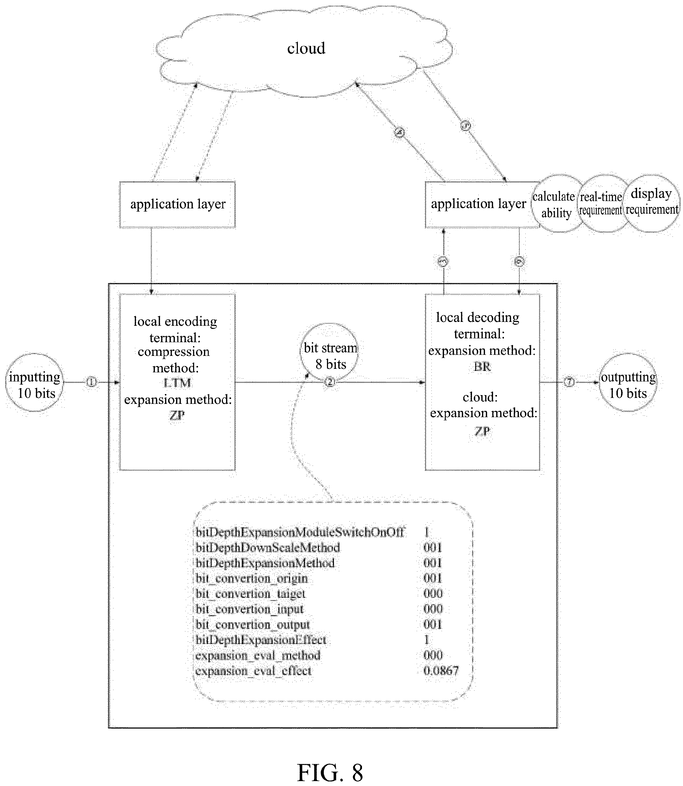

Fig. 8 is a schematic diagram showing another example application according to some embodiments of the present disclosure, which shows a situation where the decoder 300 determines that the indicated bit depth expansion method ZP is not available. It can be understood that the above process may be applicable to a situation where the bit depth expansion method configured in the decoder 300 (for example, the BR expansion method) is inconsistent with the indicated bit depth expansion method (for example, the ZP expansion method). In this case, the decoder 300 may acquire relevant data about the indicated ZP expansion method from the cloud, such as via a network, so that the decoder 300 may execute the indicated ZP expansion method on the decoded picture.

Using the encoding method and decoding method for video data provided by the embodiments of the present disclosure, it is possible to perform bit depth transform processing on the picture before encoding the picture, and then encode the generated transformed picture to form the encoding information of the picture. In addition, bit depth transform information is generated for transmission in the bitstream together with encoding information, so that the decoder may process the bit depth of the decoded picture correspondingly according to the bit depth transform information parsed in the bitstream to meet the display requirements of such as the display device; using the bit depth transform information transmitted in the bitstream is conducive to more flexible implementation of the bit depth transform process, and can also realize the information communication about the bit depth transform between the decoding terminal and the encoding terminal.

According to still another aspect of the present disclosure, a computing device is also provided for executing the encoding method or the decoding method according to some embodiments of the present disclosure.

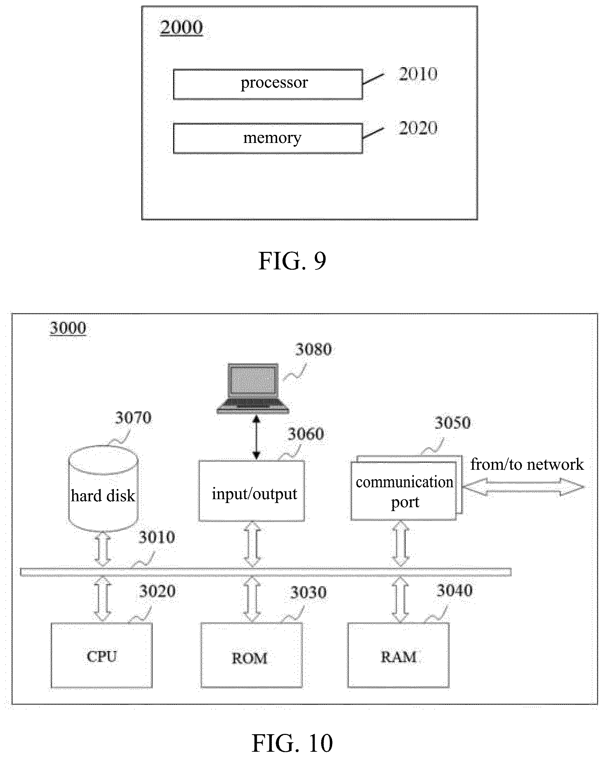

FIG 9 is a schematic block diagram illustrating a computing device according to some embodiments of the present disclosure. As shown in FIG 9, the computing device 2000 may include a processor 2010 and a memory 2020. According to an embodiment of the present disclosure, computer-readable codes are stored in the memory 2020, and when the computer-readable codes are executed by the processor 2010, the above-mentioned encoding method or decoding method can be executed.

The processor 2010 can perform various actions and processing according to programs stored in the memory 2020. Specifically, the processor 2010 may be an integrated circuit with signal processing capabilities. The above-mentioned processor may be a general-purpose processor, a digital signal processor (DSP), an application-specific integrated circuit (ASIC), an off-the-shelf programmable gate array (FPGA) or other programmable logic devices, discrete gate or transistor logic devices, and discrete hardware components. Various methods, steps, and logic block diagrams disclosed in the embodiments of the present disclosure may be implemented or executed. The general-purpose processor may be a microprocessor, or the processor may be any conventional processor, etc., and may be an X86 architecture or an ARM architecture, or the like.

The memory 2020 stores computer-executable instruction codes, which are used to implement the encoding method or the decoding method according to the embodiment of the present disclosure when executed by the processor 2010. Memory 2020 may be volatile memory or nonvolatile memory, or may include both volatile and nonvolatile memory. The nonvolatile memory can be read only memory (ROM), programmable read only memory (PROM), erasable programmable read only memory (EPROM), electrically erasable programmable read only memory (EEPROM), or flash memory. Volatile memory can be random access memory (RAM), which acts as external cache memory. By way of illustration and not limitation, many forms of RAM are available such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchronous Linked Dynamic Random Access Memory (SLDRAM) and Direct Memory Bus Random Access Memory (DR RAM). It should be noted that the memories described herein are intended to include, but are not limited to, these and any other suitable types of memories.

For the specific implementation process of the steps executed by the computing device 2000, reference may be made to the steps implemented by the encoder 200 and the decoder 300 mentioned above in conjunction with FIG 2 and FIG 3, and the description will not be repeated here.

As an example, a computing device for performing an encoding method or a decoding method according to embodiments of the present disclosure may be implemented in an architectural form as shown in FIG 10. As shown in FIG 10, computing device 3000 may include bus 3010, one or more CPUs 3020, read only memory (ROM) 3030, random access memory (RAM) 3040, communication ports 3050 to connect to a network, input/output components 3060, hard disk 3070, etc. The storage device in the computing device 3000, such as the ROM 3030 or the hard disk 3070, stores various data or files that are used in the processing and/or communication of the encoding method or decoding method provided by the present disclosure, and stores program instructions that are executed by the CPU. Computing device 3000 may also include user interface 3080. Certainly, the architecture shown in FIG 10 is only exemplary, and one or more components in the computing device shown in FIG 10 may be omitted according to actual needs when implementing different devices. As an example, the above-mentioned computing device 3000 may be implemented as a computer that is installed with a design simulation application program for integrated circuits, which is not limited here. For example, the computing device 3000 may be implemented as a codec as shown in FIG 2 or FIG 3 to implement the encoding method or decoding method according to the present disclosure.

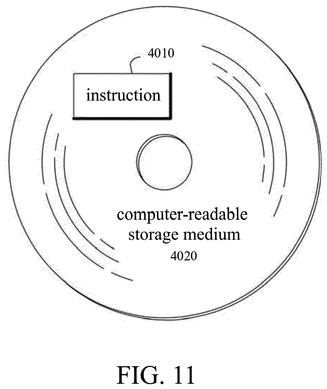

According to yet another aspect of the present disclosure, a non-transitory computer-readable storage medium is also provided. FIG 11 shows a schematic diagram of a non-transitory computer-readable storage medium according to embodiments of the present disclosure.

As shown in FIG 11, instructions are stored on a computer-readable storage medium 4020, such as computer-readable instructions 4010. When the computer-readable instructions 4010 are executed by the processor, the encoding method or the decoding method described with reference to the above figures may be performed. Computer-readable storage media include, but are not limited to, for example, volatile memory and/or nonvolatile memory. The volatile memory may include, for example, random access memory (RAM) and/or cache memory (cache). Non-volatile memory may include, for example, read-only memory (ROM), hard disk, flash memory, and the like. For example, the computer-readable storage medium 4020 is connected to a computing device such as a computer, and then, when the computing device executes the computer-readable instructions 4010 stored on the computer-readable storage medium 4020, the encoding method or decoding method as mentioned above can be performed.

According to still another aspect of the present disclosure, there is also provided a computer program product or computer program, the computer program product or computer program including computer-readable instructions stored in a computer-readable storage medium. The processor of the computer device can read the computer-readable instructions from the computer-readable storage medium, and the processor executes the computer-readable instructions, so that the computer device executes the encoding method or the decoding method that are described in the above-mentioned embodiments.

By using the encoding method, decoding method, computing apparatus and medium that are used for video data provided by the embodiments of the present disclosure, it is possible to perform bit depth transform processing on a picture before encoding the picture, and then encode the generated transformed picture to form the encoding information of the picture. In addition, the bit depth transform information is also generated to be used for transmission in the bitstream together with the encoding information, so that the decoding terminal can process the bit depth of the decoded picture correspondingly according to the bit depth transform information parsed in the bitstream, which is used to meet the display requirements of display devices. Using the bit depth transform information that is used to form the bitstream is beneficial to realize the bit depth transform process more flexibly, and can realize the information communication about the bit depth transform between the decoding terminal and the encoding terminal.

Those skilled in the art can understand that the contents disclosed in the present disclosure can have many variations and improvements. For example, the various devices or components described above can be implemented by hardware, software, firmware, or implemented in combination with some or all of the three.

In addition, although the present disclosure makes various references to some units in the system according to the embodiments of the present disclosure, any number of different units can be used and run on clients and/or servers. The units are only illustrative, and different aspects of the system and method can use different units.

A flowchart is used in the present disclosure to illustrate the steps of a method according to embodiments of the present disclosed. It should be understood that the steps before or after may not be carried out precisely in order. On the contrary, various steps can be processed in reverse order or simultaneously. Other operations can also be added to these processes.

Those skilled in the art can understand that all or part of the steps in the above method can be completed by instructing the relevant hardware through a computer program, and the program can be stored in the computer-readable storage medium, such as read-only memory, magnetic disk or optical disk, etc. Alternatively, all or part of the steps of the above embodiments can also be implemented by using one or more integrated circuits. Accordingly, each module/unit in the above embodiment can be implemented in the form of hardware or software function modules. The present disclosure is not limited to any combination of specific forms of hardware and software.

Unless otherwise defined, all terms used herein have the same meaning as those commonly understood by those skilled in the art to which this disclosure belongs. It should also be understood that the terms such as those defined in the general dictionary should be interpreted as having the meaning consistent with their meaning in the context of the relevant technology, and should not be interpreted in the sense of idealization or extreme formalization, unless explicitly defined here.

The above are only specific embodiments of the present disclosure and should not be considered as a limited thereof. Although several exemplary embodiments of the present disclosure have been described, those skilled in the art will easily understand that many modifications can be made to the exemplary embodiments without departing from the novel teaching and advantages of the present disclosure. Therefore, all these modifications are intended to be contained in the scope of the disclosure defined by the claims. It should be understood that the above is a description of the present disclosure, and should not be considered as limited to the specific embodiments disclosed, and the modification intention of the disclosed embodiments and other embodiments is included in the scope of the appended claims. The present disclosure is limited by the claims and their equivalents.

## Claims

1. An encoding method for video data, comprising:
performing bit depth transform processing on a picture to generate a transformed picture and generate bit depth transform information, wherein the bit depth transform information indicates information that is associated with the bit depth transform processing performed on the picture, and the picture is one frame of pictures in the video data; and
encoding the transformed picture to generate encoding information corresponding to the transformed picture, wherein the bit depth transform information and the encoding information are used to form a bitstream.

2. The method according to claim 1, wherein the bit depth transform processing is bit depth compression processing, and performing the bit depth transform processing on the picture, comprises:
utilizing a bit depth compression method to perform bit depth compression on the picture to reduce a bit depth of the picture,
wherein the bit depth transform information comprises bit depth compression control information indicating information that is associated with the bit depth compression processing.

3. The method according to claim 2, wherein the bit depth compression control information comprises at least one of cases below:
information indicating the bit depth compression method, information indicating an initial bit depth before the bit depth compression processing, information indicating a compressed bit depth after the bit depth compression processing.

4. The method according to claim 1, further comprising:
decoding the encoding information to generate a decoded picture; and
performing bit depth inverse transform processing on the decoded picture to generate an inverse transformed picture and generate bit depth inverse transform information,
wherein the bit depth inverse transform processing and the bit depth transform processing are inverse operations, and the bit depth inverse transform information indicates information that is associated with the bit depth inverse transform processing performed on the decoded picture.

5. The method according to claim 4, further comprising:
comparing the inverse transformed picture with the picture to perform effect verification to generate bit depth verification effect information,
wherein the bit depth verification effect information comprises at least one of cases below:
verification control information indicating whether to perform the effect verification, information indicating an effect verification method of the effect verification, and information indicating a verification result of the effect verification method.

6. The method according to claim 4, wherein the bit depth inverse transform information comprises bit depth inverse transform control information indicating information that is associated with the bit depth inverse transform processing.

7. The method according to claim 6, wherein the bit depth inverse transform control information comprises bit depth inverse transform switch information indicating whether to perform the bit depth inverse transform processing on the decoded picture.

8. The method according to claim 7, wherein performing the bit depth inverse transform processing on the decoded picture, comprises:
in response to the bit depth inverse transform switch information indicating that the bit depth inverse transform processing is performed, bit depth utilizing a bit depth inverse transform method to perform a bit depth inverse transform on the decoded picture, which is used for changing a bit depth of the decoded picture in a direction opposite to the bit depth transform.

9. The method according to claim 8, wherein the bit depth inverse transform control information further comprises at least one of cases below:
information indicating the bit depth inverse transform method, information indicating an input bit depth before the bit depth inverse transform processing, information indicating an output bit depth after the bit depth inverse transform processing.

10. The method according to any one of claims 4 to 9, wherein the bit depth transform processing is bit depth compression processing, and the bit depth inverse transform processing is bit depth expansion processing.

11. The method according to claim 1, wherein the bitstream comprises a bit depth transform extension bit,
the bit depth transform extension bit is used to transmit the bit depth transform information in the bitstream.

12. A decoding method for video data, comprising:
parsing, from a received bitstream, bit depth transform information and encoding information corresponding to a picture, wherein the bit depth transform information indicates information that is associated with bit depth transform processing performed during encoding of the picture, and the picture is one frame of pictures in the video data; and
performing decoding conversion processing according to the bit depth transform information and the encoding information to generate a display picture.

13. The method according to claim 12, further comprising:
parsing, from the bitstream, bit depth inverse transform information corresponding to the picture,
wherein the bit depth inverse transform information indicates information that is associated with bit depth inverse transform processing performed during the encoding of the picture.

14. The method according to claim 13, wherein performing the decoding conversion processing according to the bit depth transform information and the encoding information, comprises:
decoding the encoding information to generate a decoded picture corresponding to the picture;
performing bit depth inverse transform processing on the decoded picture with reference to the bit depth inverse transform information to generate the display picture.

15. The method according to claim 14, wherein the bit depth transform processing is bit depth compression processing, and the bit depth inverse transform processing is bit depth expansion processing, the bit depth inverse transform information comprises bit depth expansion control information, the bit depth expansion control information comprises information indicating a bit depth expansion method, and the decoding method further comprises:
determining whether the bit depth expansion method is available;
in case it is determined that the bit depth expansion method is available, expanding a bit depth according to the bit depth expansion method; and
in case it is determined that the bit depth expansion method is not available, receiving the bit depth expansion method for performing bit depth expansion on the decoded picture according to the bit depth expansion method.

16. The method according to claim 14, wherein, before performing the bit depth inverse transform processing on the decoded picture, the decoding method further comprises:
receiving control information indicating whether to perform the bit depth inverse transform processing, and determining whether to perform the bit depth inverse transform processing on the decoded picture with reference to the control information, wherein the control information is based on at least one of cases generated by: computing power of a decoder, battery information of a decoder, bit depth display requirements of a display; or
parsing, from the bitstream, bit depth verification effect information corresponding to the picture, comparing the decoded picture with bit depth expansion effect information, and judging whether to perform the bit depth inverse transform processing on the decoded picture with reference to a comparison result.

17. The method according to claim 12, wherein the bit depth transform processing is bit depth compression processing, the bit depth transform information comprises bit depth compression control information indicating information that is associated with the bit depth compression processing,
performing the decoding conversion processing according to the bit depth transform information and the encoding information, comprises:
performing decoding conversion processing on the encoding information with reference to the bit depth compression control information.

18. The method according to claim 12, wherein parsing, from the received bitstream, the bit depth transform information, comprises:
parsing the bit depth transform information from a bit depth transform extension bit in the bitstream.

19. A device for video processing, comprising:
a processor, and
a non-transitory memory, on which computer-readable code is stored,
wherein the computer-readable code, when executed by the processor, performs the encoding method according to any one of claims 1 to 11, or performs the decoding method according to any one of claims 12 to 18.

20. A computer-readable storage medium, on which instructions are stored, wherein the instructions, when executed by a processor, cause a processor to implement the encoding method according to any one of claims 1 to 11, or implement the decoding method according to any one of claims 12 to 18.
